# EUROPEAN PATENT APPLICATION

(11) **EP 4 331 764 A1**
(43) Date of publication of application: **06.03.2024**
(21) Application number: 22795468.2
(22) Date of filing: 29.03.2022
(51) Int. Cl.: B23D 61/04

(54) **CIRCULAR SAW BLADE WITH TIP**

(30) Priority: 27.04.2021 JP 2021075029
(71) Applicant: Kanefusa Kabushiki Kaisha, Ohguchi-cho, Niwa-gun Aichi 480-0192 (JP)
(72) Inventor: NAKANO, Takao, Niwa-gun, Aichi 480-0192 (JP); OOYABU, Kazuki, Niwa-gun, Aichi 480-0192 (JP)
(74) Representative: Maikowski & Ninnemann Patentanwälte Partnerschaft mbB
(86) International application number: PCT/JP2022/015431
(87) International publication number: WO 2022/230552

(57) **Abstract**

A circular saw blade (1) includes a disc-shaped base metal (2) having an outer diameter of 200 mm to 500 mm, and first tips (11) and second tips (13) arranged alternately along an outer circumference of the base metal (2). The circular saw blade (1) has a blade thickness (1a) of 0.8 mm to 2.0 mm. The first tips (11) and second tips (13) have cutting edges (11c, 13c) and a pair of chamfers (11f) at both ends of the cutting edges (1 1c,13c). A first groove (12) and a second groove (14) are formed in a flank so as to extend in a circumferential direction of the cutting edges (11c, 13c). The first groove (12) includes a first groove bottom (12e) that is deepest in a radial direction at a position of a first distance (13a) from a thickness center (7c) in a first thickness direction. The second groove (14) has a second groove bottom (14e) that is deepest in the radial direction at a position of a second distance (15b) from the thickness center (7c) in a second thickness direction opposite to the first thickness direction. A sum of the first distance (15a) and the second distance (15b) is 0.35 mm or less.

## Description

### Technical Field

One aspect of the present disclosure relates to tipped circular saw blades having a disc shape with a plurality of tips joined at an outer circumference that are configured to cut workpieces made of, for example, various metals at high speed.

### Background

A circular saw cutting machine has conventionally been known as a device for cutting workpieces made of various metals at high speed using a circular saw blade having, for example, a disc shape with a blade thickness of 2 mm. The circular saw blade forms grooves in a workpiece made of steel material or non-steel material such as aluminum to cut the workpiece. The circular saw blade has a base metal and a plurality of tips joined at an outer circumference of the base metal at predetermined intervals. The tips may be hard tips made of, for example, cemented carbide or cermet.

Each tip has a cutting edge extending linearly in the thickness direction of the base metal and a flank oriented radially outward of the base metal. The flank extends rearward from the cutting edge in the rotational direction of the circular saw blade at a flank angle. A groove is formed in the flank to segment the cutting edge. The circular saw blade includes a variety of tips, with the positions of the grooves misaligned. The variety of tips is arranged in a predetermined order in the circumferential direction of the base metal. For example, first tips having a groove on the left side as viewed from the rake face and second tips having a groove on the right side are alternately disposed. Cutting edges of the variety of tips cut a workpiece in a predetermined order. Therefore, cutting chips cut out of the workpiece are cut into pieces by the cutting tips segmented by the groove of each tip. The net cutting power of each tip may thus be reduced. As a result, the power needed to cut the workpiece can be reduced.

A circular saw blade having a blade thickness of thinner than 2 mm may be used. WO2018/074038A describes a circular saw blade having a blade thickness of 1 mm or less and provided with tips with a groove on a flank. An amount of cutting chips generated during cutting can be reduced using a circular saw blade having a thin blade thickness. In addition, the tips provided on the circular saw blade having a blade thickness of 1 mm can be provided with a groove, which has been so far considered difficult. This may reduce the cutting resistance as well as the volume of cutting chips. As a result, the power needed to cut a workpiece can be further reduced.

Asymmetrical tips due to the groove are repeatedly subjected to the lateral force from the workpiece when cutting the cutting chips in a lateral direction (thickness direction of the base metal). The lateral force may the tips to be laterally displaced (vibrate). For example, with a thin circular saw blade having a blade thickness of 2 mm or less, the degree of lateral displacement to blade thickness tends to be large. Therefore, for example, the friction is generated between side faces of tips and a workpiece. Thermal expansion and thermal contraction of the tips repeat at locations where the frictional heat is generated. This may result in chipping of tips (heat crack).

Cutting may be performed by feeding the workpiece at a feed rate several times faster than the normal feed rate. The feed rate can be accelerated by increasing the rotational speed of the circular saw blade or by increasing the depth of cut per insert. Increasing the feed rate further increases the frictional heat generated between the tips and the workpiece. Therefore, when a circular saw blade with a thin blade thickness is used to cut the workpiece at a high feed rate, chipping due to frictional heat is more likely to occur in the tips. Therefore, further improvement in the durability of the tips has been desired for circular saw blades with a blade thickness of 2 mm or less.

### Summary of Invention

### Technical Problem

Accordingly, a structure to improve the durability of tips has long been desired for tipped circular saw blade that has a thin blade thickness and can feed a workpiece at high speed to cut. For example, the durability of tips can be improved by preventing the occurrence of chipping caused by frictional heat.

### Solution to Problem

According to one aspect of the present disclosure, a tipped circular saw blade includes a disc-shaped base metal having an outer diameter of 200 mm to 500 mm and first tips and second tips arranged alternately along an outer circumference of the base metal so as to project radially from the outer circumference of the base metal. The circular saw blade may have a blade thickness of 0.8 mm to 2.0 mm. Each of the first tips and each of the second tips have a rake face oriented frontward in a rotational direction of the circular saw blade, a flank oriented radially outward of the base metal, and a cutting edge formed between the rake face and the flank. A pair of chamfers is formed at both ends of the cutting edge, and a groove is formed in the flank so as to extend from the cutting edge in the circumferential direction. The groove of the first tip has a first groove bottom that is deepest in the radial direction at a location of a first distance from the thickness center of the cutting edge of the first tip in the first thickness direction. The groove of the second tip has a second groove bottom that is deepest in the radial direction at a location of a second distance from the thickness center of the cutting edge of the second tip in the second thickness direction opposite to the first thickness direction. The sum of the first distance and the second distance may be 0.35 mm or less.

Therefore, the distance between the first groove bottom and the second groove bottom may be shortened. The first tip receives a lateral force from the thickness center of the cutting edge toward the first thickness direction where the first groove is located when cutting a workpiece. The second tip receives a lateral force toward the second thickness direction where the second groove is located when cutting a workpiece. By reducing the sum of the first distance and the second distance, the lateral force applied to the first tip and the second tip can be reduced. Therefore, the lateral displacement of the first tip and the second tip can be reduced.

Moreover, the sum of the first distance and the second distance may be set to 0.35 mm or less, which is smaller than the conventional distance. This prevents the lateral displacement of the first tip and the second tip when cutting the workpiece at a high feed rate using a thin circular saw blade having a blade thickness of 2.0 mm or less. Therefore, the generation of frictional heat can be suppressed, for example, at the side faces of the first tip and the second tip, thereby preventing occurrence of chipping due to frictional heat. This may improve the durability of the first tip and the second tip.

According to another aspect, each groove has a pair of groove ends intersecting with the cutting edge and a pair of inclined surfaces provided between one of the pair of groove ends and a groove bottom and inclined with respect to the cutting edge. A groove end angle between the cutting edge and the inclined surface at the groove end may be 60° to 85°. Therefore, the angular shape at the groove end may be provided at an obtuse angle by setting the groove end angle to 85° or less. This may prevent chipping of the groove ends more than if, for example, the groove ends have an angular shape at a right angle. Moreover, by setting the groove end angle to 60° or more, the sum of the first distance and the second distance can be reduced. Therefore, lateral displacement of the first tip and the second tip can be prevented. As a result, chipping of the first tip and the second tip due to frictional heat can be prevented.

Therefore, there will be no uneven occurrence of chipping on both ends of the tip. This ensures that the state in which the cut surface of the workpiece can be satisfactorily machined can be maintained for a long time. Moreover, an increase in the cutting resistance of the first tip and the second tip with respect to the workpiece can be suppressed. It is thus possible to suppress the generation of frictional heat, for example, on both side faces of the first tip and the second tip. This can extend the life of the first and second tips.

According to another aspect, a groove has a pair of groove ends intersecting with the cutting edge, and a pair of inclined surfaces provided between one of the pair of groove ends and the groove bottom and inclined with respect to the cutting edge. The groove end angle between the cutting edge and the inclined surface at the groove end is larger than the angle of the pair of chamfers with respect to the cutting edge.

According to another aspect, an inner edge of the first groove, which is a groove of the first tip, and the thickness center of the cutting edge of the first tip are separated by a first inner distance. An inner edge of the second groove, which is a groove of the second tip, and the thickness center of the cutting edge of the second tip are separated by a second inner distance. The sum of the first inner distance and the second inner distance is smaller than an opening width of the first groove in the cutting edge and smaller than an opening width of the second groove in the cutting edge. Alternatively, the sum of the first inner distance and the second inner distance is smaller than half of the opening width of the first groove in the cutting edge and smaller than half of the opening width of the second groove in the cutting edge.

According to another aspect, the groove in the first tip has a first depth in the radial direction from the cutting edge. The groove in the second tip has a second depth in the radial direction from the cutting edge. Both the first depth and second depth are two times or more and five times or less than the depth in the radial direction of the pair of chamfers from the cutting edge.

### Brief Description of Drawings

FIG. 1 is a side view of a circular saw blade.
FIG. 2 is an enlarged side view of a segment II in FIG. 1.
FIG. 3 is a partially enlarged top view of the circular saw blade.
FIG. 4 is a partially enlarged top view of the circular saw.
FIG. 5 is a partially enlarged front view of the top of the circular saw blade.
FIG. 6 is a front view schematically illustrating a relationship between tips and feedings when cutting a workpiece with the circular saw blade.
FIG. 7 is a partially enlarged front view of a tip according to a first embodiment.
FIG. 8 is a partially enlarged front view of a tip according to a second embodiment.
FIG. 9 is a partially enlarged front view of a tip according to a third embodiment.
FIG. 10 is a partially enlarged front view of a tip according to a fourth embodiment.
FIG. 11 is a partially enlarged front view of a tip according to a fifth embodiment.
FIG. 12 is a partially enlarged front view of a tip according to a sixth embodiment.
FIG. 13 is a partially enlarged front view of a tip according to a seventh embodiment.
FIG. 14 is a partially enlarged front view of a tip according to an eighth embodiment.
FIG. 15 is a partially enlarged front view of a tip according to a ninth embodiment.
FIG. 16 is a partially enlarged front view of a tip according to a tenth embodiment.
FIG. 17 is a table representing a relationship between shape of grooves formed in the tip and lateral displacement of the tip.
FIG. 18 is a graph illustrating a relationship between groove bottom distance and the lateral displacement of the tip.
FIG. 19 is a schematic front view of a tip and a workpiece to be cut by the tip.
FIG. 20 is a diagram showing equivalent stress at a cross-section taken along line XX-XX in FIG. 19.
FIG. 21 is a diagram illustrating equivalent stress at a cross-section taken along line XX-XX in FIG. 19.
FIG. 22 is a diagram illustrating equivalent stress at a cross-section taken along line XX-XX in FIG. 19.
FIG. 23 is a diagram illustrating equivalent stress at a cross-section taken along line XX-XX in FIG. 19.
FIG. 24 is a diagram illustrating equivalent stress at a cross-section taken along line XX-XX in FIG. 19.
FIG. 25 is a table representing a relationship between shape of grooves formed in the tip and number of occurrences of heat cracks.
FIG. 26 is a table representing a relationship between number of cuttings in workpiece by the circular saw blade and chipping of tips.
FIG. 27 is a partially enlarged top view of the tip of the first embodiment after cutting.
FIG. 28 is a partially enlarged left side view of the tip shown in FIG. 27.
FIG. 29 is a partially enlarged right side view of the tip shown in FIG. 27.
FIG. 30 is a partially enlarged front view of the tip according to the first embodiment after cutting.
FIG. 31 is a partially enlarged top view of the tip according to the first embodiment after cutting.
FIG. 32 is a partially enlarged left side view of the tip shown in FIG. 31.
FIG. 33 is a partially enlarged top view of the tip according to the first embodiment after cutting.
FIG. 34 is a partially enlarged left side view of the tip shown in FIG. 33.
FIG. 35 is a partially enlarged front view of the tip shown in FIG. 33.
FIG. 36 is a partially enlarged top view of the tip according to the third embodiment after cutting.
FIG. 37 is a partially enlarged left side view of the tip shown in FIG. 36.

### Embodiments for carrying out the Invention

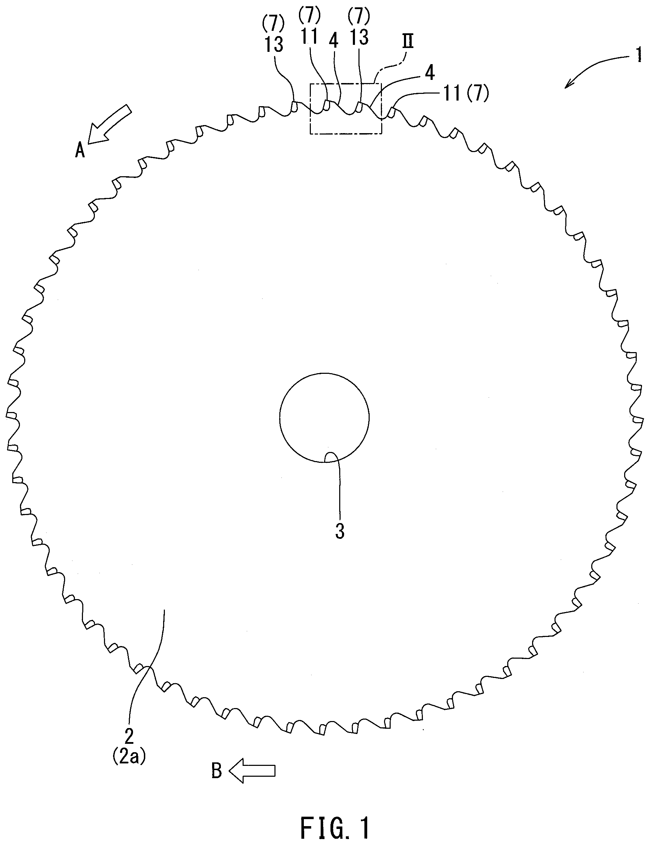

A preferred embodiment of the present disclosure will be described with reference to FIGS. 1 to 7. The same reference numerals in the description denote the same elements and redundant description will be eliminated. As shown in FIG. 1, a circular saw blade 1 includes a disc-shaped base metal 2, and a plurality of tips 7 joined at an outer circumference of the base metal 2. By rotating the base metal 2, each tip 7 forms a groove in the workpiece and finally cuts the workpiece. The workpiece may be, for example, steel materials such as carbon steel, general structural rolled steel, chromium molybdenum steel, stainless steel, cast iron, or non-ferrous metals such as aluminum and aluminum alloys, copper, and copper alloys. The workpiece may be, for example rod-shaped, columnar, tubular, or plate-shaped, and is cut to a predetermined length by the circular saw blade 1.

As shown in FIG. 1, a substantially circular mounting hole 3 is provided in a center of the base metal 2 that passes through the base metal 2 in a plate thickness direction. A rotational shaft of the circular saw cutting machine is inserted into the mounting hole 3. The circular saw cutting machine may be used, for example, when cutting a workpiece made of various metals at room temperature. The circular saw blade 1 rotates in an A direction when cutting a workpiece and moves in a B direction relative to the workpiece. As a result, the plurality of tips 7 lined up around the outer circumference of the base metal 2 meets the workpiece in sequence.

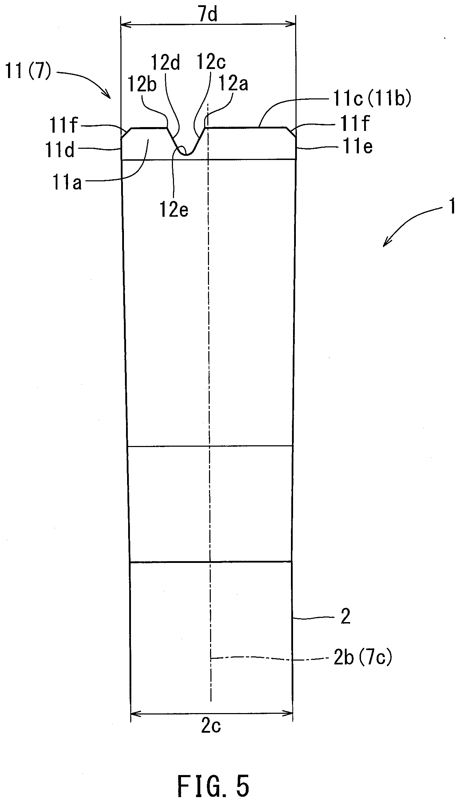

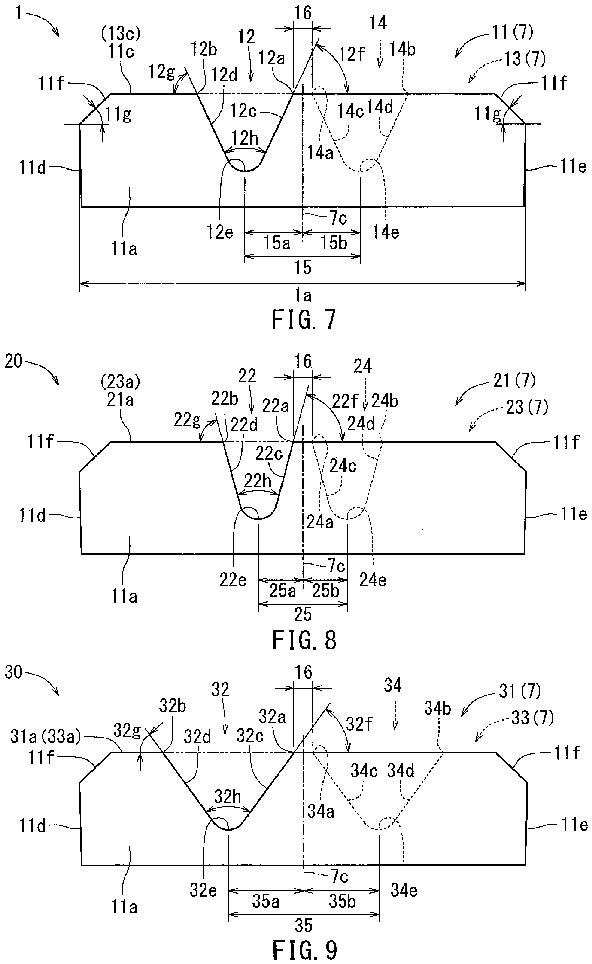

As shown in FIG. 1, an outer diameter of the circular saw blade 1 is, for example 200 mm to 500 mm. It is preferably 200 mm to 400 mm, more preferably 200 mm to 300 mm, for example 285 mm. The base metal 2 may be made of steel, for example. A blade thickness 1a (see FIG. 7) of the circular saw blade 1 is, for example, 0.8 mm to 2.0 mm. A blade thickness 1a is preferably 0.8 mm to 1.0 mm. The base metal 2 has a disc-shaped body 2a, and a plurality of projections 4 that project radially outward from an outer circumference of the body 2a. The plurality of projections 4 is formed at predetermined intervals in the circumferential direction of the outer circumference of the body 2a. The thickness 2c of the base metal 2 is slightly thinner than the blade thickness 1a, and may, for example, be 0.6 mm to 1.8 mm (see FIG. 5).

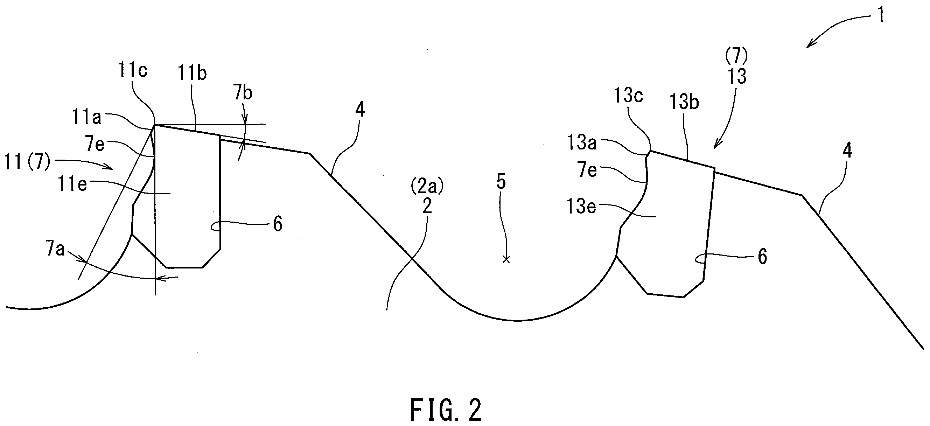

As shown in FIGS. 1 and 2, a gullet 5 is formed between the adjacent projections 4. Each projection 4 is formed with a tip sheet 6 that opens in a circumferential direction in the front in the rotational direction and radially outward. Each tip 7 is attached to each tip sheet 3. For example, 40 to 200 pieces of tips 7 are attached to the base metal 2 by brazing or the like.

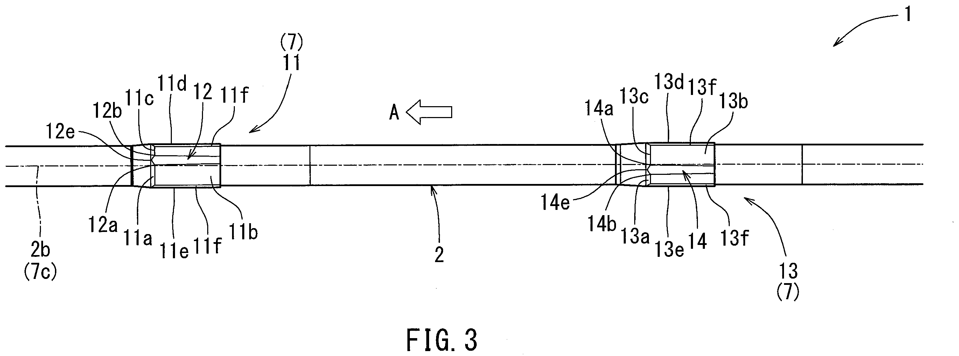

As shown in FIGS. 2 and 3, the tips 7 include first tips 11 and second tips 13 with different configurations. The first tips 11 and the second tips 13 are attached at the base metal 2 alternately in the circumferential direction at predetermined intervals. Therefore, the first tips 11 and the second tips 13 alternately meet the workpiece to cut the workpiece. The tips 7 are hard tips that may be made of, for example, cemented carbide or cermet. For example, cemented carbide is obtained by mixing tungsten carbide with cobalt as a binder and sintering. Cermet is obtained by mixing TiN, TiC, TiCN, etc. with cobalt as a binder, and sintering. The surface of tip 7 may be coated to improve wear resistance.

As shown in FIGS. 2 and 3, the tips 7 have a substantially rectangular parallelepiped shape with flanks 11b and 13b oriented radially outward. Cutting edges 11c, 13c are formed at one ends of the flanks 11b, 13b. The cutting edges 11c, 13c have a thickness 7d (see FIG. 5) slightly greater than the thickness 2c of the base metal 2. The thickness 7d may be, for example, 0.8 mm to 1.1 mm. The tips 7 are disposed on the base metal 2 such that the thickness center 7c of the tips 7 is arranged on the thickness center 2b, which is the center of the base metal 2 in the thickness direction. The cutting edges 11c, 13c are positioned at the front ends in the rotational direction of the flanks 11b, 13b and extend in the thickness direction of the base metal 2. A clearance angle 7b between the circumferential tangents of the base metal 2 and the flanks 11b, 13b at the cutting edges 11c, 13c may be, for example, 5° to 15°.

As shown in FIG. 2, the tips 7 have rake faces 11a, 13a extending from the cutting edges 11c, 13c toward the center of the base metal 2. In other words, the cutting edges 11c, 13c are formed at intersections of the flanks 11b, 13b and the rake faces 11a, 13a. A rake angle 7a of the rake faces 11a and 13a inclined with respect to the radial direction of the base metal 2 is -30° to 10°. The tip 7 has a recess 7e in the front in the rotational direction and radially inward of the rake faces 11a, 13a. The recesses 7e are recessed toward the center of the tip 7 from the rake faces 11a, 13a as viewed from the side.

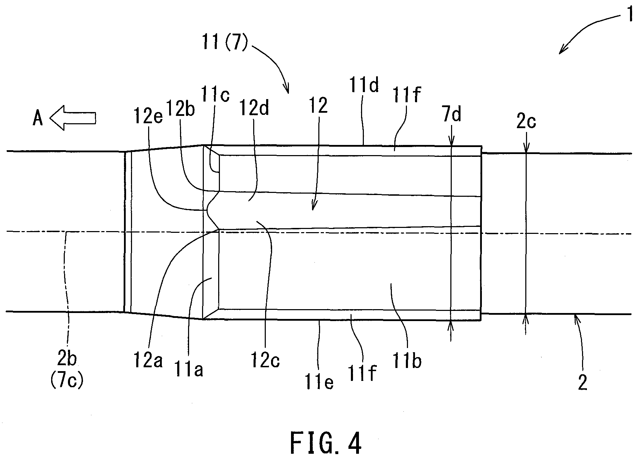

As shown in FIGS. 4 and 5, the first tip 11 has a left side face 11d and a right side face 11e at both ends in the thickness direction of the flank 11b. The left side face 11d and the right side face 11e have an angle of 0° to 2° with respect to the radial direction of the base metal 2, for example, an inwardly inclined angle (radial clearance angle) of 30'. This slight inclination of the left side face 11d and the right side face 11e reduces the contact area with the workpiece. Therefore, cutting resistance is reduced. Furthermore, since the left side face 11d and the right side face 11e are inclined in such a manner that they do not protrude excessively from the cut surface of the workpiece, the cut surface can be smoothly finished.

As shown in FIGS. 4 and 5, a chamfer 11f is formed between the flank 11b and the left side face 11d or the right side face 11e. The chamfer 11f is inclined with respect to the flank 11b and has a chamfer angle 11g of, for example, 45° (see FIG. 7). The pair of left and right chamfers 11f have substantially the same chamfer angle with respect to the flank 11b. The pair of left and right chamfers 11f are provided symmetrically about the thickness center 7c. The chamfer 11f is formed flat along the entire length of the edge of the flank 11b. The width in the thickness direction of the chamfer 11f may be, for example, 0.05 mm to 0.1 mm, and has substantially the same width over the entire length.

As shown in FIGS. 4 and 5, the flank 11b of the first tip 11 is formed with a first groove 12 extending in the circumferential direction. The first groove 12 extends from the cutting edge 11c, which is one end of the flank 11b, to the rear end of the flank 11b in the rotational direction. The first groove 12 is provided to the left (first thickness direction) of the thickness center 7c. The first groove 12 is substantially V-shaped when viewed from the front in the rotational direction of the circular saw blade 1. The first groove 12 has an inner inclined surface 12c and an outer inclined surface 12d that are substantially planar and inclined with respect to the cutting edge 11c. The inner inclined surface 12c is provided at a position closer to the thickness center 7c than the outer inclined surface 12d. The inner inclined surface 12c and the outer inclined surface 12d are connected by a first groove bottom 12e having a substantially arc-shaped curved surface when viewed from the front in the rotational direction of the circular saw blade 1. The first groove bottom 12e is positioned to the left of the thickness center 7c.

As shown in FIG. 7, the first groove 12 has an inner groove end 12a and an outer groove end 12b located at the cutting edge 11c. The inner groove end 12a is provided at the intersection of the cutting edge 11c and the inner inclined surface 12c. The outer groove end 12b is provided at the intersection of the cutting edge 11c and the outer inclined surface 12d. The inner groove end 12a is positioned to the left of the thickness center 7c. The outer groove end 12b is provided at a position farther from the thickness center 7c than the inner groove end 12a. The inner inclined surface 12c has an inner groove end angle 12f with respect to the cutting edge 11c at the inner groove end 12a. The outer inclined surface 12d has an outer groove end angle 12g with respect to the cutting edge 11c at the outer groove end 12b. The inner groove end angle 12f and the outer groove end angle 12g may be of the same angle of 65°. The first groove 12 is symmetrical in the thickness direction with respect to the first groove bottom 12e. A groove bottom angle 12h between the inner inclined surface 12c and the outer inclined surface 12d may be 50°.

As shown in FIGS. 3 and 7, the flank 13b of the second tip 13 is formed with a second groove 14 extending in the circumferential direction from the cutting edge 13c to the rear end of the flank 13b in the rotational direction. The second groove 14 is provided in a shape and position symmetrical to the first groove 12 with respect to the thickness center 7c. The second groove 14 is provided to the right (second thickness direction) of the thickness center 7c. The second groove 14 has an inner inclined surface 14c and an outer inclined surface 14d that are substantially planar and inclined with respect to the cutting edge 13c. The inner inclined surface 14c is provided at a position closer to the thickness center 7c than the outer inclined surface 14d. The inner inclined surface 14c and the outer inclined surface 14d are connected by a second groove bottom 14e to form a substantially V shape. The second groove bottom 14e is a substantially arc-shaped curved surface when viewed from the front in the rotational direction of the circular saw blade 1. The second groove bottom 14e is positioned to the right of the thickness center 7c.

As shown in FIG. 7, the second groove 14 has an inner groove end 14a at the intersection of the cutting edge 13c and the inner inclined surface 14c. The second groove 14 has an outer groove end 14b at the intersection of the cutting edge 13c and the outer inclined surface 14d. The inner groove end 14a is positioned to the right of the thickness center 7c. The outer groove end 14b is provided at a position farther from the thickness center 7c than the inner groove end 14a. The inner groove end angle between the inner inclined surface 14c and the cutting edge 13c may be 65°, which may be the same as the inner groove end angle 12f. The outer groove end angle between the outer inclined surface 14d and the cutting edge 13c may be 65°, which may be the same as the outer groove end angle 12g. The groove bottom angle between the inner inclined surface 14c and the outer inclined surface 14d may be 50°, which may be the same as the groove bottom angle 12h.

As shown in FIG. 7, a groove end distance 16 between the inner groove end 12a and the inner groove end 14a is greater than 0 mm, for example 0.04 mm. The first groove bottom 12e has a first distance 15a from the thickness center 7c. The second groove bottom 14e has a second distance 15b from the thickness center 7c. The first distance 15a and the second distance 15b are of the same size. A groove bottom distance 15, which is the sum of the first distance 15a and the second distance 15b, is 0.35 mm or less. It is preferably 0.30 mm or less, for example 0.28 mm. The first distance 15a and the second distance 15b are based on the illustrated lower end position, which is the deepest in the radial direction of the base metal 2 (see FIG. 5) among the first groove bottom 12e and the second groove bottom 14e. The groove widths of the first groove 12 and the second groove 14 may be, for example, 0.26 mm.

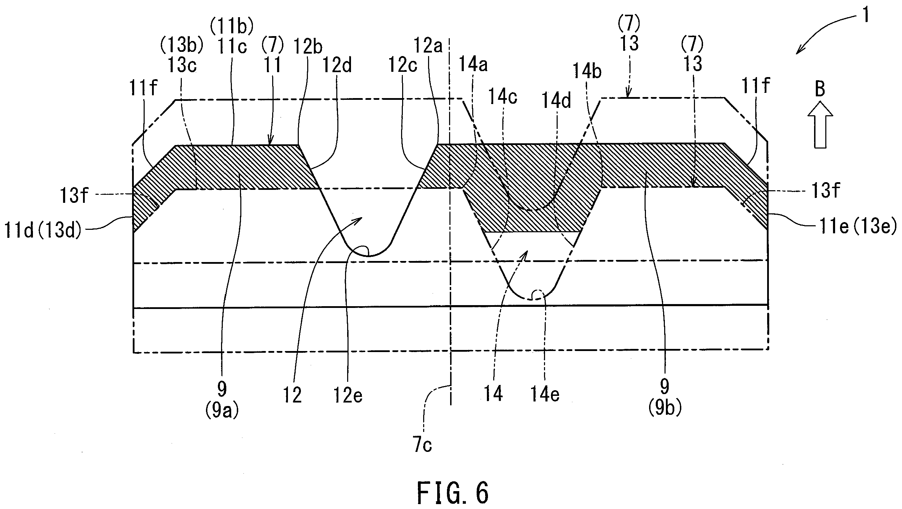

As shown in FIG. 6, a cutting chip 9 cut from the workpiece by the first tip 11 is cut into pieces of cutting chips 9a and 9b by the first groove 12. The first groove 12 is positioned to the left of the thickness center 7c. Therefore, the width of the cutting chip 9a on the left side is narrower than that of the cutting chip 9b on the right side. The cutting edge 11c to the right of the first groove 12 that cuts the wider chip 9b is subjected to greater cutting resistance from the workpiece than the cutting edge 11c to the left of the first groove 12 that cuts the narrower cutting chip 9a. The first tip 11 may be displaced in the left/right direction due to the cutting resistance. The lateral displacement of the first tip 11 causes friction between the left side face 11d or the right side face 11e and the workpiece. Since there is a difference in cutting resistance between the left and right cutting edges 11c, the frictional heat generated on the right side face 11e tends to be greater than that on the left side face 11d. Therefore, the greater frictional heat tends to be generated at the intersection of the right side face 11e and the chamfer 11f, and then the second greater frictional heat tends to be generated at the intersection of the left side face 11d and the chamfer 11f.

As shown in FIG. 6, the intersections of both left and right ends of the cutting edge 11c and the pair of chamfers 11f are formed in an obtuse angular shape. Therefore, at the intersections of both left and right ends of the cutting edge 11c and the chamfer 11f, friction with the workpiece due to lateral displacement is relatively prevented. The cutting chips cut from the workpiece by the second tip 13 are inverted left and right about the thickness center 7c as compared with respect to the cutting chips cut by the first tip 11. Therefore, greater frictional heat tends to be generated at the intersection of the left side face 13d and the chamfer 13f, and then the second greater frictional heat tends to be generated at the intersection of the right side 13e and the chamfer 13f.

As shown in FIG. 7, the sum of the first distance 15a and the second distance 15b is 0.35 mm or less, for example 0.28 mm. Therefore, the difference in width between narrower cutting chip 9a (see FIG. 6) and wider cutting chip 9b is reduced. Therefore, the difference in cutting resistance in the left/right direction (width direction) of the cutting edges 11c and 13c is reduced, which prevents the lateral displacement of the tips 7. As a result, the frictional heat generated between the left side face 11d or the right side face 11e and the workpiece can be suppressed. Thus, chipping due to the frictional heat may be suppressed on the left side face 11d or the right side face 11e. The inner groove end angle 12f and the outer groove end angle 12g may be greater than or equal to 60°, for example 65°. Therefore, the distance between the first groove bottom 12e and the second groove bottom 14e can be shortened. As a result, the first groove12 and the second groove 14 can be easily provided so that the sum of the first distance 15a and the second distance 15b is 0.35 mm or less.

As described above, as shown in FIGS. 1 and 5, the circular saw blade 1 includes a disc-shaped base metal 2 having an outer diameter of 200 mm to 500 mm, and first tips 11 and second tips 13 alternately arranged along the outer circumference of the base metal 2 so as to radially project from the outer circumference of the base metal 2. The circular saw blade 1 has a blade thickness 1a of 0.8 mm to 2.0 mm. The first tip 11 and the second tip 13 have a rake face 11a, 13a oriented to the front in the rotational direction of the circular saw blade 1, a flank 11b, 13b oriented radially outward of the base metal 2 and a cutting edge 11c, 13c defined between the rake face 11a, 13a and the flank 11b, 13b. A pair of chamfers 11f, 13f are provided at both ends of the cutting edges 11c, 13c, and a first groove 12 and a second groove 14 are formed at the flank 11b, 13b that extend from the cutting edges 11c, 13c in the circumferential direction.

As shown in FIG. 7, the first groove 12 of the first tip 11 has the radially deepest first groove bottom 12e at a first distance 15a in a first thickness direction from the thickness center 7c of the cutting edge 11c of the first tip 11. The second groove 14 of the second tip 13 has the radially deepest second groove bottom 14e at a second distance 15b in a second thickness direction that is opposite to the first thickness direction, from the thickness center 7c of the cutting edge 13c of the second tip 13. The groove bottom distance 15, which is the sum of the first distance 15a and the second distance 15b, is 0.35 mm or less.

Therefore, the distance between the first groove bottom 12e and the second groove bottom 14e can be shortened. The first tip 11 receives a lateral force toward the first thickness direction where the first groove 12 is located when cutting the workpiece. The second tip 13 receives a lateral force toward the second thickness direction where the second groove 14 is located when cutting the workpiece. By reducing the sum of the first distance 15a and the second distance 15b, the lateral force applied to the first tip 11 and the second tip 13 can be reduced. Therefore, the lateral displacement of the first tip 11 and the second tip 13 can be prevented.

Moreover, the sum of the first distance 15a and the second distance 15b may be set to 0.35 mm or less, which is smaller than the conventional distance. This prevents the lateral displacement of the first tip 11 and the second tip 13 when cutting the workpiece at a high feed rate of, for example, 2.5 folds or more than that of normal cutting using the thin circular saw blade 1 having a blade thickness 1a of 2.0 mm or less. Therefore, the generation of frictional heat can be suppressed, for example, at the left side faces 11d and 13d and the right side faces 11e and 13e of the first tip 11 and the second tip 13, thereby preventing occurrence of chipping due to frictional heat. As a result, the durability of the first tip 11 and the second tip 13 can be improved.

As shown in FIG. 7, the first groove 12 and the second groove 14 have a pair of inner groove ends 12a, 14a and outer groove ends 12b, 14b that intersect the cutting edges 11c, 13c. A pair of inner inclined surfaces 12c, 14c and outer inclined surfaces 12d, 14d are provided between either one of the pair of inner groove ends 12a, 14a or outer groove ends 12b, 14b and the groove bottoms 12e, 14e, and are inclined with respect to the cutting edges 11c, 13c. The inner groove end angle 12f between the cutting edge 11c and the inner inclined surface 12c at the inner groove end 12a may be 60° to 85°. The outer groove end angle 12g between the cutting edge 11c and the outer inclined surface 12d at the outer groove end 12b may be 60° to 85°.

Therefore, by setting the inner groove end angle 12f and the outer groove end angle 12g to 85° or less, the angular shape of the inner groove end 12a and the outer groove end 12b can be provided at an obtuse angle. This prevents chipping of the inner groove end 12a and the outer groove end 12b more than if, for example, the groove ends have a right-angled shape. Moreover, by setting the inner groove end angle 12f and the outer groove end angle 12g to 60° or more, the sum of the first distance 15a and the second distance 15b can be reduced. Therefore, lateral displacement of the first tip 11 and the second tip 13 can be prevented. As a result, chipping of the first tip 11 and the second tip 13 due to frictional heat can be prevented.

Therefore, there will be no uneven occurrence of chipping on both ends of the first tip 11 and the second tip 13. This ensures the state in which the cut surface of the workpiece can be satisfactorily machined can be maintained for a long time. Moreover, an increase in the cutting resistance of the first tip 11 and the second tip 13 with respect to the workpiece can be suppressed. It is thus possible to suppress the generation of frictional heat, for example, on the left side faces 11d and 13d and the right side faces 11e and 13e of the first tip 11 and the second tip 13. This can extend the life of the first tips 11 and second tips 13.

Hereinafter, a second embodiment of the present disclosure will be described with reference to FIG. 8. The circular saw blade 20 includes first tips 21 and second tips 23 instead of the first tips 11 and the second tips 13 shown in FIG. 7. Each of the first tips 21 has a first groove 22 extending in the circumferential direction from the cutting edge 21a instead of the first groove 12 shown in FIG. 7. Each of the second tips 23 has a second groove 24 extending in the circumferential direction from the cutting edge 23a instead of the second groove 14 shown in FIG. 7.

As shown in FIG. 8, the first groove 22 is provided in the first thickness direction to the left of the thickness center 7c. The first groove 22 has a substantially V-shape that is symmetrical as viewed from the front in the rotational direction of the circular saw blade 20. The first groove 22 has an inner inclined surface 22c and an outer inclined surface 22d that are substantially planar and inclined with respect to the cutting edge 21a. The inner inclined surface 22c is provided at a position closer to the thickness center 7c than the outer inclined surface 22d. The inner inclined surface 22c and the outer inclined surface 22d are connected by a first groove bottom 22e having a substantially arc-shaped curved surface as viewed from the front in the rotational direction of the circular saw blade 20.

As shown in FIG. 8, an inner groove end 22a is provided at the intersection of the cutting edge 21a and the inner inclined surface 22c. An outer groove end 22b is provided at the intersection of the cutting edge 21a and the outer inclined surface 22d. The inner inclined surface 22c has an inner groove end angle 22f with respect to the cutting edge 21a at the inner groove end 22a. The outer inclined surface 22d has an outer groove end angle 22g with respect to the cutting edge 21a at the outer groove end 22b. The inner groove end angle 22f and the outer groove end angle 22g may be of the same angle of 75°. A groove bottom angle 22h between the inner inclined surface 22c and the outer inclined surface 22d may be 30°.

As shown in FIG. 8, the second groove 24 is provided in a shape and position symmetrical to the first groove 12 with respect to the thickness center 7c. The second groove 24 is provided to the right of the thickness center 7c in the second thickness direction. The second groove 24 has an inner inclined surface 24c and an outer inclined surface 24d that are substantially planar and inclined with respect to the cutting edge 23a. The inner inclined surface 24c is provided at a position closer to the thickness center 7c than the outer inclined surface 24d. The inner inclined surface 24c and the outer inclined surface 24d are connected by a second groove bottom 24e having a substantially arc-shaped curved surface when viewed from the front in the rotational direction of the circular saw blade 20.

As shown in FIG. 8, an inner groove end 24a is provided at the intersection of the cutting edge 23a and the inner inclined surface 24c. An outer groove end 24b is provided at the intersection of the cutting edge 23a and the outer inclined surface 24d. An inner groove end angle between the inner inclined surface 24c and the cutting edge 23a may be the same angle of 75° as the inner groove end angle 22f. An outer groove end angle between the outer inclined surface 24d and the cutting edge 23a may be the same angle of 75° as the outer groove end angle 22g.

As shown in FIG. 8, a groove end distance 16 between the inner groove end 22a and the inner groove end 24a may be, for example 0.04 mm. A first distance 25a between the first groove bottom 22e and the thickness center 7c may be the same as a second distance 25b between the second groove bottom 24e and the thickness center 7c. A groove bottom distance 25, which is the sum of the first distance 25a and the second distance 25b, may be 0.35 mm or less. It is preferably 0.30 mm or less, for example 0.26 mm. The groove widths of the first groove 22 and the second groove 24 may be, for example, 0.22 mm.

Hereinafter, a third embodiment of the present disclosure will be described with reference to FIG. 9. The circular saw blade 30 includes first tips 31 and second tips 33 instead of the first tips 11 and the second tips 13 shown in FIG. 7. Each of the first tips 31 has a first groove 32 extending in the circumferential direction from the cutting edge 31a instead of the first groove 12 shown in FIG. 7. Each of the second tips 33 has a second groove 34 extending in the circumferential direction from the cutting edge 33a instead of the second groove 14 shown in FIG. 7.

As shown in FIG. 9, the first groove 32 is provided in the first thickness direction to the left of the thickness center 7c. The first groove 32 has a substantially V-shape that is symmetrical as viewed from the front in the rotational direction of the circular saw blade 30. The first groove 32 has an inner inclined surface 32c and an outer inclined surface 32d that are substantially planar and inclined with respect to the cutting edge 31a. The inner inclined surface 32c is provided at a position closer to the thickness center 7c than the outer inclined surface 32d. The inner inclined surface 32c and the outer inclined surface 32d are connected by a first groove bottom 32e having a substantially arc-shaped curved surface as viewed from the front in the rotational direction of the circular saw blade 30.

As shown in FIG. 9, an inner groove end 32a is provided at the intersection of the cutting edge 31a and the inner inclined surface 32c. An outer groove end 32b is provided at the intersection of the cutting edge 31a and the outer inclined surface 32d. The inner inclined surface 32c has an inner groove end angle 32f with respect to the cutting edge 31a at the inner groove end 32a. The outer inclined surface 32d has an outer groove end angle 32g with respect to the cutting edge 31a at the outer groove end 32b. The inner groove end angle 32f and the outer groove end angle 32g may be of the same angle of 55°. A groove bottom angle 32h between the inner inclined surface 32c and the outer inclined surface 32d may be 70°.

As shown in FIG. 9, the second groove 34 is provided in a shape and position symmetrical to the first groove 32 with respect to the thickness center 7c. The second groove 34 is provided to the right of the thickness center 7c in the second thickness direction. The second groove 34 has an inner inclined surface 34c and an outer inclined surface 34d that are substantially planar and inclined with respect to the cutting edge 33a. The inner inclined surface 34c is provided at a position closer to the thickness center 7c than the outer inclined surface 34d. The inner inclined surface 34c and the outer inclined surface 34d are connected by a second groove bottom 34e having a substantially arc-shaped curved surface when viewed from the front in the rotational direction of the circular saw blade 30.

As shown in FIG. 9, an inner groove end 34a is provided at the intersection of the cutting edge 33a and the inner inclined surface 34c. An outer groove end 34b is provided at the intersection of the cutting edge 33a and the outer inclined surface 34d. An inner groove end angle between the inner inclined surface 34c and the cutting edge 33a may be the same angle of 55° as the inner groove end angle 32f. An outer groove end angle between the outer inclined surface 34d and the cutting edge 33a may be the same angle of 55° as the outer groove end angle 32g. A groove end distance 16 between the inner groove end 32a and the inner groove end 34a may be, for example 0.04 mm. A first distance 35a between the first groove bottom 32e and the thickness center 7c may be the same as a second distance 35b between the second groove bottom 34e and the thickness center 7c. A groove bottom distance 35, which is the sum of the first distance 35a and the second distance 35b, may be 0.35 mm or less, for example, 0.34 mm. The groove widths of the first groove 32 and the second groove 34 may be, for example, 0.32 mm.

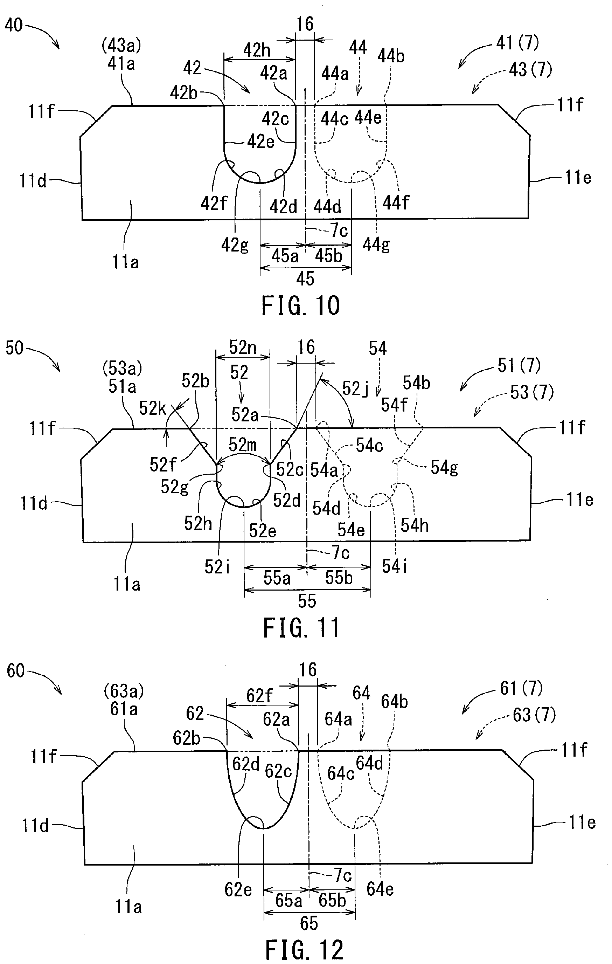

Hereinafter, a fourth embodiment of the present disclosure will be described with reference to FIG. 10. The circular saw blade 40 includes first tips 41 and second tips 43 instead of the first tips 11 and the second tips 13 shown in FIG. 7. Each of the first tips 41 has a first groove 42 extending in the circumferential direction from the cutting edge 41a instead of the first groove 12 shown in FIG. 7. Each of the second tips 43 has a second groove 44 extending in the circumferential direction from the cutting edge 43a instead of the second groove 14 shown in FIG. 7.

As shown in FIG. 10, the first groove 42 is provided in the first thickness direction to the left of the thickness center 7c. The first groove 42 has a substantially U-shape that is symmetrical as viewed from the front in the rotational direction of the circular saw blade 40. The first groove 42 has an inner upright surface 42c and an outer upright surface 42e that are substantially planar orthogonal to the cutting edge 41a. The inner upright surface 42c is provided in a position closer to the thickness center 7c than the outer upright surface 42e. The inner upright surface 42c and the outer upright surface 42e are smoothly connected to the inner inclined surface 42d and the outer inclined surface 42f on the side closer to the center of the base metal 2 (lower side in the Figure). The inner inclined surface 42d and the outer inclined surface 42f are a substantially arc-shaped curved surface as viewed from the front in the rotational direction of the circular saw blade 40. In other words, the inner inclined surface 42d and the outer inclined surface 42f include a surface inclined with respect to the cutting edge 41a. The inner inclined surface 42d and the outer inclined surface 42f are connected via a first groove bottom 42g at the center of the first groove 42.

As shown in FIG. 10, an inner groove end 42a is provided at the intersection of the cutting edge 41a and the inner upright surface 42c. An outer groove end 42b is provided at the intersection of the cutting edge 41a and the outer upright surface 42e. An inner groove end angle between the inner upright surface 42c and the cutting edge 41a, and an outer groove end angle between the outer upright surface 42e and the cutting edge 41a may be 90°. The groove width 42h of the first groove 42 may be 0.30 mm or less. The first groove 42 may be formed with the same groove depth as the first groove 12 shown in FIG. 7.

As shown in FIG. 10, the second groove 44 is provided in a shape and position symmetrical to the first groove 42 with respect to the thickness center 7c. The second groove 44 is provided to the right of the thickness center 7c in the second thickness direction. The second groove 44 has an inner upright surface 44c and an outer upright surface 44e that are substantially planar orthogonal to the cutting edge 43a. The inner upright surface 44c is provided at a position closer to the thickness center 7c than the outer upright surface 44c. The inner upright surface 44c and the outer upright surface 44e are smoothly connected to the inner inclined surface 44d and the outer inclined surface 44f on the side closer to the center of the base metal 2. The inner inclined surface 44d and the outer inclined surface 44f are substantially arc-shaped curved surface when viewed from the front in the rotational direction of the circular saw blade 40. The inner inclined surface 44d and the outer inclined surface 44f are connected at a second groove bottom 44g in the center of the second groove 44.

As shown in FIG. 10, an inner groove end 44a is provided at the intersection of the cutting edge 43a and the inner upright surface 44c. An outer groove end 44b is provided at the intersection of the cutting edge 43a and the outer upright surface 44e. The inner groove end 44a is positioned to the right of the thickness center 7c. A groove end distance 16 between the inner groove end 42a and the inner groove end 44a may be, for example 0.04 mm. A first distance 45a between the first groove bottom 42e and the thickness center 7c may be the same as a second distance 45b between the second groove bottom 44e and the thickness center 7c. A groove bottom distance 45, which is the sum of the first distance 45a and the second distance 45b, may be 0.35 mm or less. It is preferably, 0.30 mm or less, for example, 0.20 mm.

Hereinafter, a fifth embodiment of the present disclosure will be described with reference to FIG. 11. The circular saw blade 50 includes first tips 51 and second tips 53 instead of the first tips 11 and the second tips 13 shown in FIG. 7. Each of the first tips 51 has a first groove 52 extending in the circumferential direction from the cutting edge 51a instead of the first groove 12 shown in FIG. 7. Each of the second tips 53 has a second groove 54 extending in the circumferential direction from the cutting edge 53a instead of the second groove 14 shown in FIG. 7.

As shown in FIG. 11, the first groove 52 is provided in the first thickness direction to the left of the thickness center 7c. The first groove 52 has a shape in which a symmetrical substantially V-shape and a substantially U-shape are aligned and connected in the radial direction of the base metal 2 as viewed from the front in the rotational direction of the circular saw blade 50. The first groove 52 has an inner inclined surface 52c and an outer inclined surface 52f that are substantially planer inclined with respect to the cutting edge 51a. The inner inclined surface 52c is provided in a position closer to the thickness center 7c than the outer inclined surface 52f. The inner inclined surface 52c is connected to an inner U-shaped surface 52e at an inner U-shaped end 52d on the side close to the center of the base metal 2 (lower side in the Figure). The outer inclined surface 52f is connected to an outer U-shaped surface 52h at an outer U-shaped end 52g on the side close to the center of the base metal 2.

As shown in FIG. 11, the inner U-shaped surface 52e and the outer U-shaped surface 52h have a substantially planar surface orthogonal to the cutting edge 51a at some illustrated upper parts that are closer to the cutting edge 51a. In addition, the inner U-shaped surface 52e and the outer U-shaped surface 52h have a substantially arc-shaped curved surface at portions illustrated lower parts that is far from the cutting edge 51a. The inner U-shaped surface 52e and the outer U-shaped surface 52h are connected at a first groove bottom 52i in the center of the first groove 52. The inner U-shaped surface 52e and the outer U-shaped surface 52h are symmetrical about the first groove bottom 52i. The inner U-shaped surface 52e and the outer U-shaped surface 52h form a substantially U-shaped groove, which has a U-shaped groove width 52n of 0.12 mm.

As shown in FIG. 11, an inner groove end 52a is provided at the intersection of the cutting edge 51a and the inner inclined surface 52c. An outer groove end 52b is provided at the intersection of the cutting edge 51a and the outer inclined surface 52f. The inner inclined surface 52c has an inner groove end angle 52j with respect to the cutting edge 51a at the inner groove end 52a. The outer inclined surface 52f has an outer groove end angle 52k with respect to the cutting edge 51a at the outer groove end 52b. The inner groove end angle 52j and the outer groove end angle 52k may be of the same angle of 55°. A groove bottom angle 52m between the inner inclined surface 52c and the outer inclined surface 52f may be 70°.

As shown in FIG. 11, the second groove 54 is provided in a shape and position symmetrical to the first groove 52 with respect to the thickness center 7c. The second groove 54 is provided to the right of the thickness center 7c in the second thickness direction. The second groove 54 has an inner inclined surface 54c and an outer inclined surface 54f that are substantially planar and inclined with respect to the cutting edge 53a. The inner inclined surface 54c is provided at a position closer to the thickness center 7c than the outer inclined surface 54f. The inner inclined surface 54c is connected to an inner U-shaped surface 54e at an inner U-shaped end 54d on the side closer to the center of the base metal 2. The outer inclined surface 54f is connected to an outer U-shaped surface 54h at an outer U-shaped end 54g on the side closer to the center of the base metal 2. The inner U-shaped surface 54e and the outer U-shaped surface 54h are connected at a second groove bottom 54i at the center of the second groove 54.

As shown in FIG. 11, an inner groove end 54a is provided at the intersection of the cutting edge 53a and the inner inclined surface 54c. An outer groove end 54b is provided at the intersection of the cutting edge 53a and the outer inclined surface 54f. An inner groove end angle between the inner inclined surface 54c and the cutting edge 53a may be the same angle of 55° as the inner groove end angle 52j. An outer groove end angle between the outer inclined surface 54f and the cutting edge 53a may be the same angle of 55° as the outer groove end angle 52k. A groove end distance 16 between the inner groove end 52a and the inner groove end 54a may be, for example 0.04 mm. A first distance 55a between the first groove bottom 52i and the thickness center 7c is the same as a second distance 55b between the second groove bottom 54i and the thickness center 7c. A groove bottom distance 55, which is the sum of the first distance 55a and the second distance 55b, may be 0.35 mm or less, for example, 0.30 mm. The groove widths of the first groove 52 and the second groove 54 may be provided to be narrower than the groove widths of the first groove 32 and the second groove 34 if the groove depth in the circular saw blade 30 shown in FIG. 9 is the same.

Hereinafter, a sixth embodiment of the present disclosure will be described with reference to FIG. 12. The circular saw blade 60 includes first tips 61 and second tips 63 instead of the first tips 11 and the second tips 13 shown in FIG. 7. Each of the first tips 61 has a first groove 62 extending in the circumferential direction from the cutting edge 61a instead of the first groove 12 shown in FIG. 7. Each of the second tips 63 has a second groove 64 extending in the circumferential direction from the cutting edge 63a instead of the second groove 14 shown in FIG. 7.

As shown in FIG. 12, the first groove 62 is provided in the first thickness direction to the left of the thickness center 7c. The first groove 62 has a symmetrical elliptical shape, more specifically, half of an elliptical shape or a part of an elliptical shape, as viewed from the front in the rotational direction of the circular saw blade 60. The first groove 62 has a curved inner inclined surface 62c and an outer inclined surface 62d that form an elliptical surface. The inner inclined surface 62c is provided in a position closer to the thickness center 7c than the outer inclined surface 62d. The inner inclined surface 62c and the outer inclined surface 62d are connected at a first groove bottom 62e in the center of the first groove 62. The inner inclined surface 62c and the outer inclined surface 62d are symmetrical about the first groove bottom 62e. A groove width 62f of the first groove 62 may be 0.16 mm, which may be the same as the first groove 42 shown in FIG. 10. The first groove 62 may be formed to have a substantially the same depth as the first groove 12 shown in FIG. 7.

As shown in FIG. 12, an inner groove end 62a is provided at the intersection of the cutting edge 61a and the outer inclined surface 62c. An outer groove end 62b is provided at the intersection of the cutting edge 61a and the outer inclined surface 62d. The inner inclined surface 62c is substantially orthogonal to the cutting edge 61a at the inner groove end 62a. The outer inclined surface 62d is substantially orthogonal to the cutting edge 61a at the outer groove end 62b. The tangent lines of the inner inclined surface 62c and outer inclined surface 62d are substantially parallel to the cutting edge 61a at the first groove bottom 62e. In other words, the inner inclined surface 62c and the outer inclined surface 62d include a plane inclined to the cutting edge 61a between the inner groove end 62a or the outer groove end 62b and the first groove bottom 62e.

As shown in FIG. 12, the second groove 64 is provided in a shape and position symmetrical to the first groove 62 with respect to the thickness center 7c. The second groove 64 is provided to the right of the thickness center 7c in the second thickness direction. The second groove 64 has a curved inner inclined surface 64c and an outer inclined surface 64d. The inner inclined surface 64c is provided at a position closer to the thickness center 7c than the outer inclined surface 64d. The inner inclined surface 64c and the outer inclined surface 64d are connected at the second groove bottom 64e in the center of the second groove 64.

As shown in FIG. 12, an inner groove end 64a is provided at the intersection of the cutting edge 63a and the inner inclined surface 64c. An outer groove end 64b is provided at the intersection of the cutting edge 63a and the outer inclined surface 64d. The inner groove end 64a is positioned to the right of the thickness center 7c. The inner inclined surface 64c is substantially orthogonal to the cutting edge 63a at the inner groove end 64a. The outer inclined surface 64d is substantially orthogonal to the cutting edge 63a at the outer groove end 64b. A groove end distance 16 between the inner groove end 62a and the inner groove end 64a may be, for example 0.04 mm. A first distance 65a between the first groove bottom 62e and the thickness center 7c may be the same as a second distance 65b between the second groove bottom 64e and the thickness center 7c. A groove bottom distance 65, which is the sum of the first distance 65a and the second distance 65b, may be 0.35 mm or less, for example, 0.20 mm.

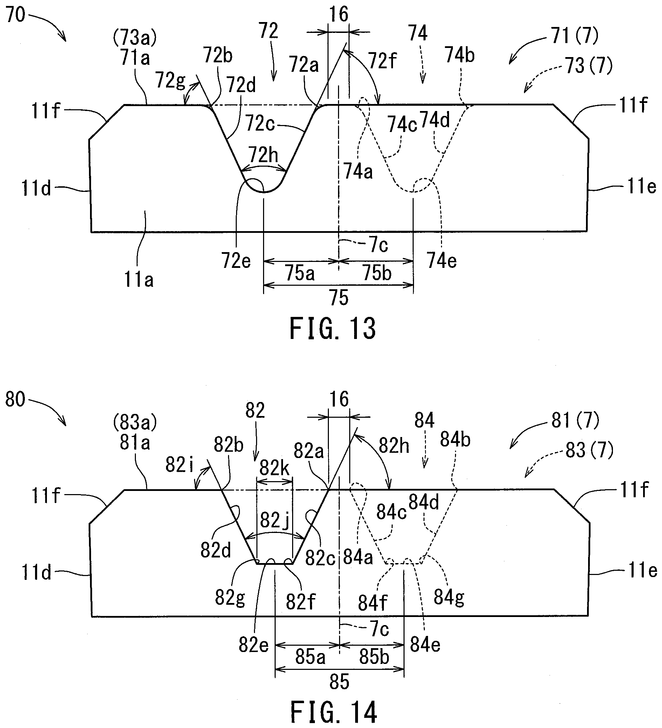

Hereinafter, a seventh embodiment of the present disclosure will be described with reference to FIG. 13. A circular saw blade 70 includes first tips 71 and second tips 73 instead of the first tips 11 and the second tips 13 shown in FIG. 7. Each of the first tips 71 has a first groove 72 extending in the circumferential direction from the cutting edge 71a instead of the first groove 12 shown in FIG. 7. Each of the second tips 73 has a second groove 74 extending in the circumferential direction from the cutting edge 73a instead of the second groove 14 shown in FIG. 7.

As shown in FIG. 13, the first groove 72 is provided in the first thickness direction to the left of the thickness center 7c. The first groove 72 has a substantially V-shape that is symmetrical as viewed from the front in the rotational direction of the circular saw blade 70. The first groove 72 has an inner inclined surface 72c and an outer inclined surface 72d that are substantially planar and inclined with respect to the cutting edge 71a. The inner inclined surface 72c and the outer inclined surface 72d are connected by a first groove bottom 72e. The inner inclined surface 72c, the outer inclined surface 72d and the first groove bottom 72e may have the same shape as the inner inclined surface 12c, the outer inclined surface 12d and the first groove bottom 12e shown in FIG. 7.

As shown in FIG. 13, an inner groove end 72a is provided at the intersection of the cutting edge 71a and the inner inclined surface 72c. An outer groove end 72b is provided at the intersection of the cutting edge 71a and the outer inclined surface 72d. The inner groove end 72a and the outer groove end 72b are provided with a substantially arc-shaped R-chamfer as viewed from the front in the rotational direction of the circular saw blade 70. The radius of the R-chamfer may be, for example, 0.01 to 0.05 mm.

As shown in FIG. 13, the inner inclined surface 72c has an inner groove end angle 72j with respect to the cutting edge 71a. The outer inclined surface 72d has an outer groove end angle 72g with respect to the cutting edge 71a. The inner groove end angle 72f and outer groove end angle 72g correspond to the angle between the tangent line and the cutting edge 71a at the illustrated lower end of the inner groove end 72a and outer groove end 72b. The inner groove end angle 72f and the outer groove end angle 72g may be of the same angle of 65°. A groove bottom angle 72h between the inner inclined surface 72c and the outer inclined surface 72d may be 50°.

As shown in FIG. 13, the second groove 74 is provided in a shape and position symmetrical to the first groove 72 with respect to the thickness center 7c. The second groove 74 is provided to the right of the thickness center 7c in the second thickness direction. The second groove 74 has an inner inclined surface 74c and an outer inclined surface 74d, which are substantially planar and inclined to the cutting edge 73a. The inner inclined surface 74c and the outer inclined surface 74d are connected at a second groove bottom 74e having a substantially arc-shaped curved surface.

As shown in FIG. 13, an inner groove end 74a having a substantially arc-shaped R-chamfer is provided at the intersection of the cutting edge 73a and the inner inclined surface 74c. An outer groove end 74b having a substantially arc-shaped R-chamber is provided at the intersection of the cutting edge 73a and the outer inclined surface 74d. An inner groove end angle between the inner inclined surface 74c and the cutting edge 73a may be the same angle of 65° as the inner groove end angle 72f. An outer groove end angle between the outer inclined surface 74d and the cutting edge 73a may be the same angle of 65° as the outer groove end angle 72g. A groove end distance 16 between the inner groove end 72a and the inner groove end 74a may be, for example 0.04 mm. A first distance 75a between the first groove bottom 72e and the thickness center 7c may be the same as a second distance 75b between the second groove bottom 74e and the thickness center 7c. A groove bottom distance 75, which is the sum of the first distance 75a and the second distance 75b, may be 0.35 mm or less, for example, 0.30 mm.

Hereinafter, an eighth embodiment of the present disclosure will be described with reference to FIG. 14. A circular saw blade 80 includes first tips 81 and second tips 83 instead of the first tips 11 and the second tips 13 shown in FIG. 7. Each of the first tips 81 has a first groove 82 extending in the circumferential direction from the cutting edge 81a instead of the first groove 12 shown in FIG. 7. Each of the second tips 83 has a second groove 84 extending in the circumferential direction from the cutting edge 83a instead of the second groove 14 shown in FIG. 7.

As shown in FIG. 14, the first groove 82 is provided in the first thickness direction to the left of the thickness center 7c. The first groove 82 has a symmetrical trapezoidal shape, e.g., an isosceles trapezoidal shape, as viewed from the front in the rotational of the circular saw blade 80. The first groove 82 has an inner inclined surface 82c and an outer inclined surface 82d that are substantially planar and inclined with respect to the cutting edge 81a. The inner inclined surface 82c and the outer inclined surface 82d are connected by a substantially planar first groove bottom 82e extending substantially parallel to the cutting edge 81a. The inner inclined surface 82c is connected to the first groove bottom 82e at the inner groove bottom end 82f that is a right end of the first groove bottom 82e. The outer inclined surface 82d is connected to the first groove bottom 82e at the outer groove bottom end 82g that is a left end of the first groove bottom 82e. A groove bottom width 82k between the inner groove bottom end 82f and the outer groove bottom end 82g may be, for example, 0.10 mm.

As shown in FIG. 14, an inner groove end 82a is provided at the intersection of the cutting edge 81a and the inner inclined surface 82c. An outer groove end 82b is provided at the intersection of the cutting edge 81a and the outer inclined surface 82d. The inner inclined surface 82c has an inner groove end angle 82h with respect to the cutting edge 81a at the inner groove end 82a. The outer inclined surface 82d has an outer groove end angle 82i with respect to the cutting edge 81a at the outer groove end 82b. The inner groove end angle 82h and the outer groove end angle 82i may be of the same angle of 65°. The groove bottom angle 82j between the inner inclined surface 82c and the outer inclined surface 82d may be 50°.

As shown in FIG. 14, the second groove 84 is provided in a shape and position symmetrical to the first groove 82 with respect to the thickness center 7c. The second groove 84 is provided to the right of the thickness center 7c in the second thickness direction. The second groove 84 has an inner inclined surface 84c and an outer inclined surface 84d, which are substantially planar and inclined to the cutting edge 83a. The inner inclined surface 84c and the outer inclined surface 84d are connected to the second groove bottom 84e extending substantially parallel to the cutting edge 83a at the inner groove bottom end 84f and the outer groove bottom end 84g.

As shown in FIG. 14, an inner groove end 84a is provided at the intersection of the cutting edge 83a and the inner inclined surface 84c. An outer groove end 84b is provided at the intersection of the cutting edge 83a and the outer inclined surface 84d. An inner groove end angle between the inner inclined surface 84c and the cutting edge 83a may be the same angle of 65° as the inner groove end angle 82h. An outer groove end angle between the outer inclined surface 84d and the cutting edge 83a may be the same angle of 65° as the outer groove end angle 82i. A groove end distance 16 between the inner groove end 82a and the inner groove end 84a may be, for example 0.04 mm. A first distance 85a between the center of the first groove bottom 82e and the thickness center 7c may be the same as a second distance 85b between the center of second groove bottom 84e and the thickness center 7c. A groove bottom distance 85, which is the sum of the first distance 85a and the second distance 85b, may be 0.35 mm or less, for example, 0.30 mm.

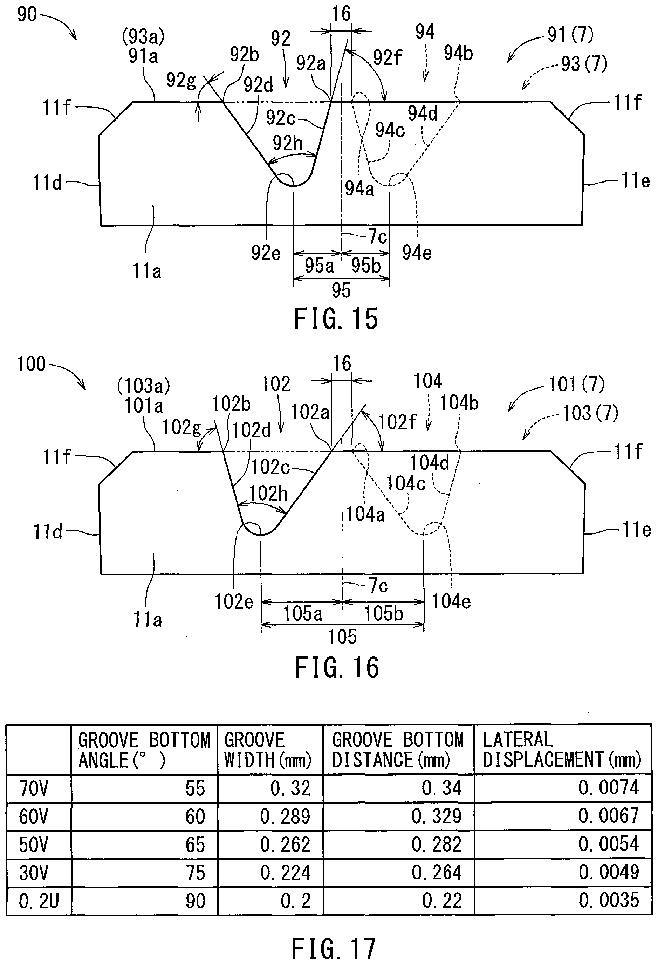

Hereinafter, a ninth embodiment of the present disclosure will be described with reference to FIG. 15. A circular saw blade 90 includes first tips 91 and second tips 93 instead of the first tips 11 and the second tips 13 shown in FIG. 7. Each of the first tips 91 has a first groove 92 extending in the circumferential direction from the cutting edge 91a instead of the first groove 12 shown in FIG. 7. Each of the second tips 93 has a second groove 94 extending in the circumferential direction from the cutting edge 93a instead of the second groove 14 shown in FIG. 7.

As shown in FIG. 15, the first groove 92 is provided in the first thickness direction to the left of the thickness center 7c. The first groove 92 has a substantially V-shape as viewed from the front in the rotational direction of the circular saw blade 90. The first groove 92 has an inner inclined surface 92c and an outer inclined surface 92d that are substantially planar and inclined with respect to the cutting edge 91a. The inner inclined surface 92c and the outer inclined surface 92d are connected by a first groove bottom 92e having an arc-shaped curved surface as viewed from the front in the rotational direction of the circular saw blade 90.

As shown in FIG. 15, an inner groove end 92a is provided at the intersection of the cutting edge 91a and the inner inclined surface 92c. An outer groove end 92b is provided at the intersection of the cutting edge 91a and the outer inclined surface 92d. The inner inclined surface 92c has an inner groove end angle 92f with respect to the cutting edge 91a. The outer inclined surface 92d has an outer groove end angle 92g with respect to the cutting edge 91a. The inner groove end angle 92f may be greater than the outer groove end angle 92g and 85° or less. The inner groove end angle 92f may be, for example, 75°. The outer groove end angle 92g may be, for example, 55°. A groove bottom angle 92h between the inner inclined surface 92c and the outer inclined surface 92d may be 50°.

As shown in FIG. 15, the second groove 94 is provided in a shape and position symmetrical to the first groove 92 with respect to the thickness center 7c. The second groove 94 is provided to the right of the thickness center 7c in the second thickness direction. The second groove 94 has an inner inclined surface 94c and an outer inclined surface 94d, which are substantially planar and inclined to the cutting edge 93a. The inner inclined surface 94c and the outer inclined surface 94d are connected at a second groove bottom 94e. An inner groove end 94a is provided at the intersection of the cutting edge 93a and the inner inclined surface 94c. An outer groove end 94b is provided at the intersection of the cutting edge 93a and the outer inclined surface 94d. An inner groove end angle between the inner inclined surface 94c and the cutting edge 93a may be the same angle as the inner groove end angle 92f, for example, 75°. An outer groove end angle between the outer inclined surface 94d and the cutting edge 93a may be the same angle as the outer groove end angle 92g, for example, 55°.

As shown in FIG. 15, a groove end distance 16 between the inner groove end 92a and the inner groove end 94a may be, for example 0.04 mm. A first distance 95a between the first groove bottom 92e and the thickness center 7c may be the same as a second distance 95b between the second groove bottom 94e and the thickness center 7c. The first distance 95a and the second distance 95b are based on positions in the first groove bottom 92e and the second groove bottom 94e that are closest to the center of the base metal 2 (see FIG. 5). A groove bottom distance 95, which is the sum of the first distance 95a and the second distance 95b, may be 0.35 mm or less and shorter than the groove bottom distance 15 shown in FIG. 7. The groove bottom distance 95 may be, for example, 0.22 mm.

Hereinafter, a tenth embodiment of the present disclosure will be described with reference to FIG. 16. A circular saw blade 100 includes first tips 101 and second tips 103 instead of the first tips 11 and the second tips 13 shown in FIG. 7. Each of the first tips 101 has a first groove 102 extending in the circumferential direction from the cutting edge 101a instead of the first groove 12 shown in FIG. 7. Each of the second tips 103 has a second groove 104 extending in the circumferential direction from the cutting edge 103a instead of the second groove 14 shown in FIG. 7.

As shown in FIG. 16, the first groove 102 is provided in the first thickness direction to the left of the thickness center 7c. The first groove 102 has a substantially V-shape as viewed from the front in the rotational direction of the circular saw blade 100. The first groove 102 has an inner inclined surface 102c and an outer inclined surface 102d that are substantially planar and inclined with respect to the cutting edge 101a. The inner inclined surface 102c and the outer inclined surface 102d are connected by a first groove bottom 102e having an arc-shaped curved surface as viewed from the front in the rotational direction of the circular saw blade 100.

As shown in FIG. 16, an inner groove end 102a is provided at the intersection of the cutting edge 101a and the inner inclined surface 102c. An outer groove end 102b is provided at the intersection of the cutting edge 101a and the outer inclined surface 102d. The inner inclined surface 102c has an inner groove end angle 102f with respect to the cutting edge 101a. The outer inclined surface 102d has an outer groove end angle 102g with respect to the cutting edge 101a. The outer groove end angle 102g may be greater than the inner groove end angle 102f and 85° or less. The inner groove end angle 102f may be, for example, 55°. The outer groove end angle 102g may be, for example, 75°. A groove bottom angle 102h between the inner inclined surface 102c and the outer inclined surface 102d may be 50°.

As shown in FIG. 16, the second groove 104 is provided in a shape and position symmetrical to the first groove 102 with respect to the thickness center 7c. The second groove 104 is provided to the right of the thickness center 7c in the second thickness direction. The second groove 104 has an inner inclined surface 104c and an outer inclined surface 104d, which are substantially planar and inclined to the cutting edge 103a. The inner inclined surface 104c and the outer inclined surface 104d are connected at the second groove bottom 104e. An inner groove end 104a is provided at the intersection of the cutting edge 103a and the inner inclined surface 104c. An outer groove end 104b is provided at the intersection of the cutting edge 103a and the outer inclined surface 104d. An inner groove end angle between the inner inclined surface 104c and the cutting edge 103a may be the same angle as the inner groove end angle 102f, for example, 55°. An outer groove end angle between the outer inclined surface 104d and the cutting edge 103a may be the same angle as the outer groove end angle 102g, for example, 75°.

As shown in FIG. 16, a groove end distance 16 between the inner groove end 102a and the inner groove end 104a may be, for example 0.04 mm. A first distance 105a between the first groove bottom 102e and the thickness center 7c may be the same as a second distance 105b between the second groove bottom 104e and the thickness center 7c. A groove bottom distance 105, which is the sum of the first distance 105a and the second distance 105b, may be 0.35 mm or less and greater than the groove bottom distance 15 shown in FIG. 7. The groove bottom distance 105 may be, for example, 0.35 mm. Although the groove bottom distance 105 is relatively large, the angular shape of the inner groove ends 102a, 104a may be formed at a large obtuse angle. Therefore, chipping at the inner groove ends 102a. 104a may be prevented.

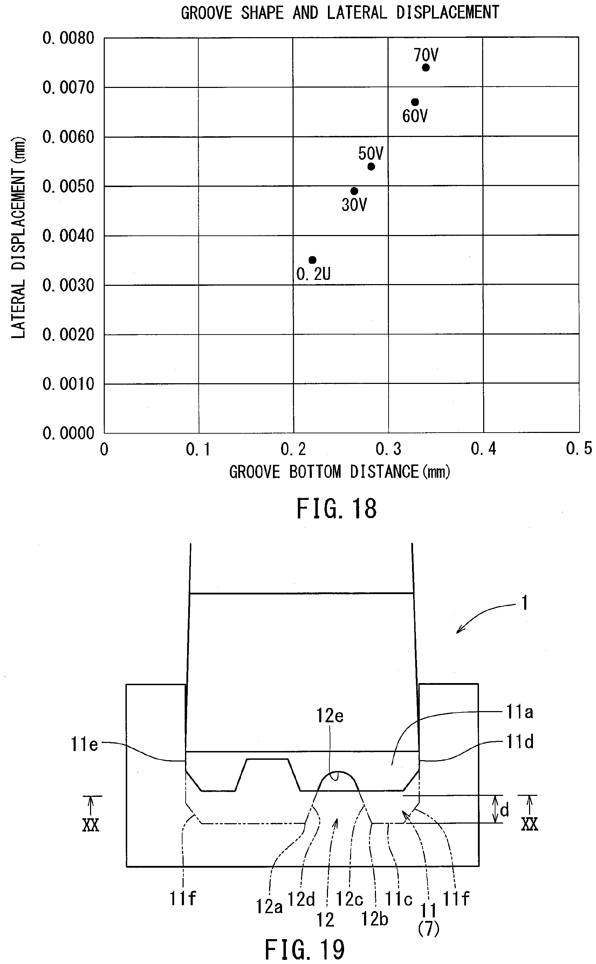

As shown in FIGS. 17 and 18, comparative tests were conducted on the relationship between groove shape and lateral displacement for the circular saw blades of each of the above-described embodiments. All test pieces were circular saw blades with an outer diameter of 285 mm, a circular saw blade thickness of 1.0 mm, a base metal thickness of 0.8 mm, a mounting hole diameter of 40 mm, and the number of edges of 80. The tips used were hard tips made of cermet. The workpiece was a non-toned steel bar with an outer diameter of 37 mm. Cutting was performed under cutting conditions of a rotation speed of 150 rpm, a per blade cutting depth of 0.105 mm, and a feed rate of 1260 mm/min. The feed rate is roughly 2.5 times of the normal cutting process. Test piece 70V corresponds to the circular saw blade 30 shown in FIG. 9. Test piece 60V is the circular saw blade corresponding to the circular saw blade 1 shown in FIG. 7 with the inner groove edge angle 12f and outer groove edge angle 12g replaced with 60° and the groove bottom angle 12h replaced with 60°. Test piece 50V corresponds to the circular saw blade 1 shown in FIG. 7. Test piece 30V corresponds to the circular saw blade 20 shown in FIG. 8. Test piece 0.2U is the circular saw blade with the groove width 42h of the circular saw blade 40 shown in FIG. 10 replaced with 0.20.

As shown in FIGS. 17 and 18, the larger the groove end angle, the smaller the groove bottom distance can be provided. It was found that the lateral displacement of tips can be suppressed as the groove bottom distance is reduced. Particularly, the lateral displacement was suppressed by more than or equal to 0.001 mm between Test piece 60V with a groove end angle of 60° and Test piece 50V with a groove end angle of 65°. In addition, the lateral displacement of Test piece 0.2U with a groove end angle of 90° was reduced to equal to or less than half that of Test piece 70V with a groove end angle of 55°.

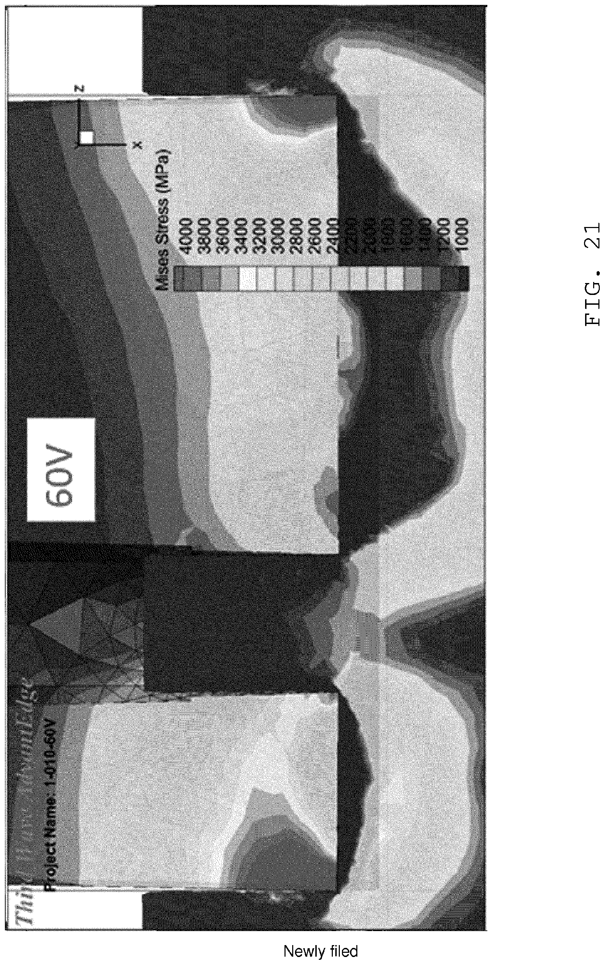

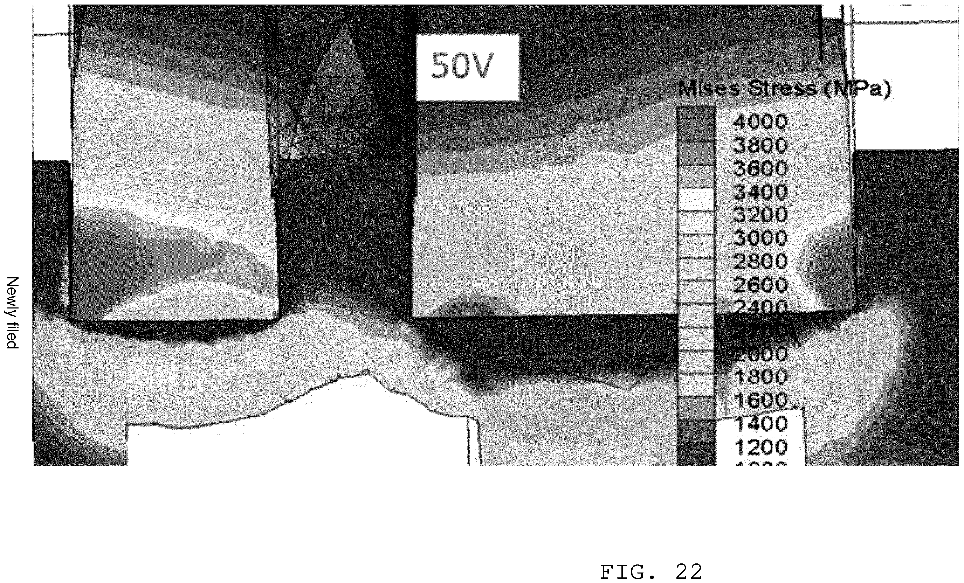

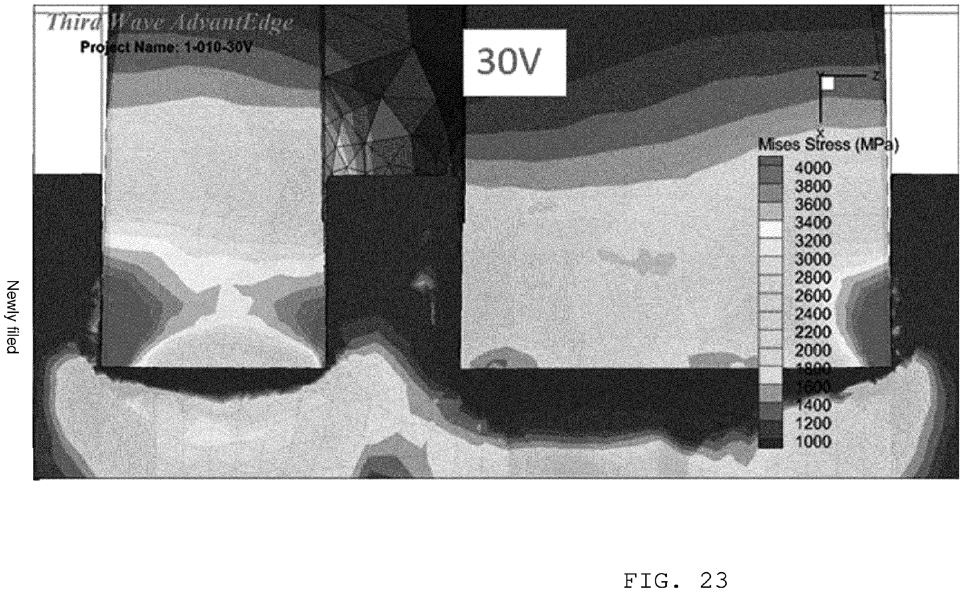

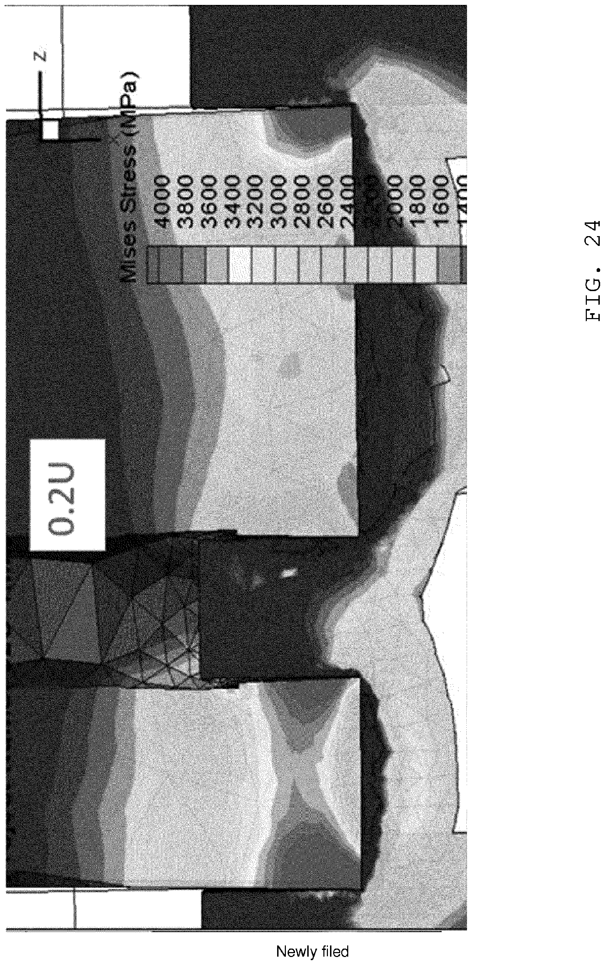

As shown in FIGS. 19 to 24, simulations were conducted to analyze the equivalent stress during cutting for the tips of each of the above-described embodiments. Test pieces and cutting conditions were set up similar to those in the tests shown in FIGS. 17 and 18. The equivalent stress applied to the tip at a cross-section in a position at a depth d of 0.10 mm from the bottom of the groove formed in the workpiece were simulated when the tips cut the workpiece.

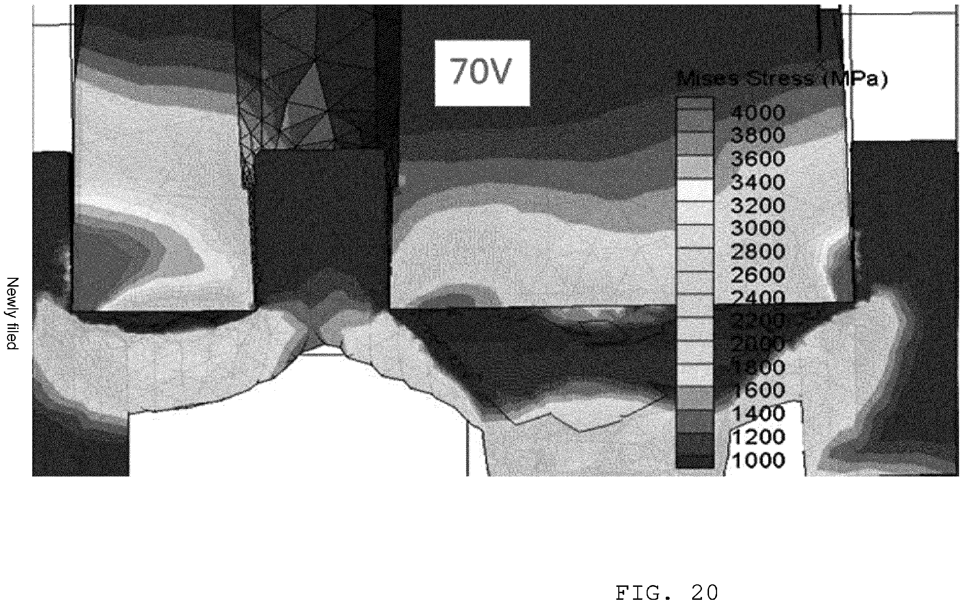

As shown in FIGS. 20 to 24, the simulation results show that high equivalent stress occurs near the cutting edges on both side faces of each tip. Comparing the narrower cutting edge on the left side of the diagram with the wider cutting edge on the right side of the diagram, the maximum value of the equivalent stress is substantially the same in magnitude. As for the distribution of the equivalent stress, higher values of the equivalent stress are distributed more widely for the narrower cutting edge than the wider cutting edge on the right side of the diagram. Moreover, there is a tendency for a higher equivalent stress distribution to be distributed widely from the side of the tip to the groove as the groove edge angle of the groove formed in the tip is greater. Particularly, in the case of Test piece 30V with the groove end angle of 75° and Test piece 0.2U with the groove end angle of 90°, the equivalent stress of substantially the same magnitude as that on the left side face 11d occurs in a position corresponding to the outer inclined surface 22d shown in FIG. 8 and the outer upright surface 42e shown in FIG. 10. When testing Test piece 0.2U to cut the workpiece, chipping occurred at the location corresponding to the outer upright surface 42e.

Based on the above-described test results and simulation results, the tip having a groove with the groove end angle of 60° to 85° is determined as one preferable configuration in the present disclosure. With this configuration, the lateral displacement of the tip can be prevented, and generation of the large equivalent stress is prevented from occurring around the groove end. As a result, the durability of tips can be improved.

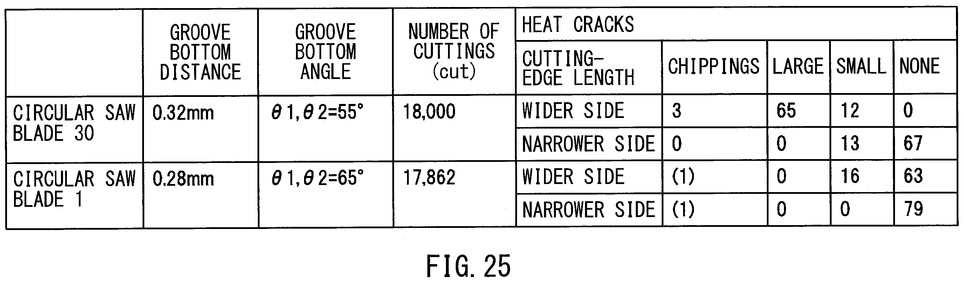

As shown in FIG. 25, the number of heat cracks generated was measured for the above-described circular saw blades 1, 30. Test pieces and cutting conditions are set up similar to those in the tests shown in FIGS. 17 and 18. Cuttings were performed until the number of cuttings reached about 18,000 cuts and the number of tips with heat cracks was measured for each state of heat cracks. In FIG. 25, θ1 represents the inner groove end angles 12f, 32f (see FIGS. 7 and 9), while θ2 represents the outer groove end angles 12g, 32g. The cutting edges 11c, 31a on the side with a wider cutting-edge length represent the area from the inner groove ends 12a, 32a to the intersection with the right chamfer 11f. The cutting edges 11c, 31a on the side with a narrower cutting-edge length represent the area from the outer groove ends 12b, 32b to the intersection with the left chamfer 11f

As shown in FIG. 25, no heat cracks occurred on the cutting edge 11c on the side with the narrower cutting-edge length of the circular saw blade 1. In FIG. 25, the tips in parentheses represent the tips with chippings originating from the area that were not the area of boundary wear that comes into friction with the workpiece. No other chippings were observed on these tips. Therefore, they were excluded from the number of heat cracks generated considering that these are not chippings caused by the heat cracks. A small degree of heat cracks accompanied by one to two streaks occurred on the cutting edges 11c (see FIG. 7) on the side with the wider cutting-edge length of the sixteen tips 7 (see FIG. 7). No large degree of heat cracks accompanied by three or more streaks and chippings caused by the heat cracks occurred on the cutting tips 11c on the side with the wider cutting-edge length.

As shown in FIG. 25, in thirteen tips 7 (see FIG. 9) of the circular saw blade 30, small degrees of heat cracks occurred on the cutting edges 31a on the side with a narrower cutting-edge length of thirteen tips. No large degree of heat cracks or chippings caused by the heat cracks occurred on the cutting edge 31a on the side with narrower cutting-edge length. Heat cracks occurred on the cutting edges 31a on the side with the wider cutting-edge length of all tips 7 on the circular saw blade 30. A large degree of heat cracks occurred on sixty-five tips 7, while chippings due to the heat cracks occurred on three tips 7.

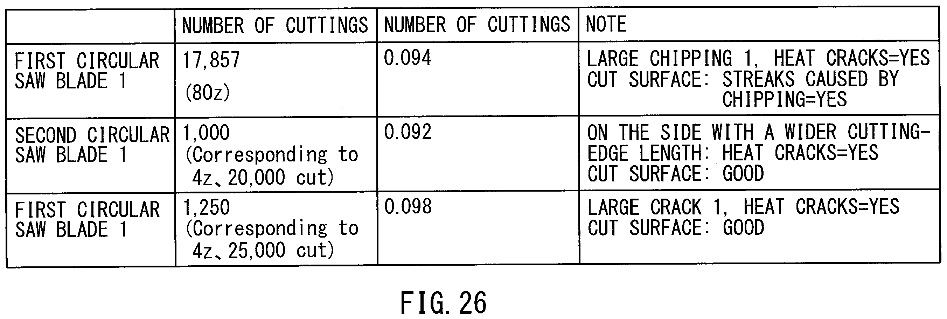

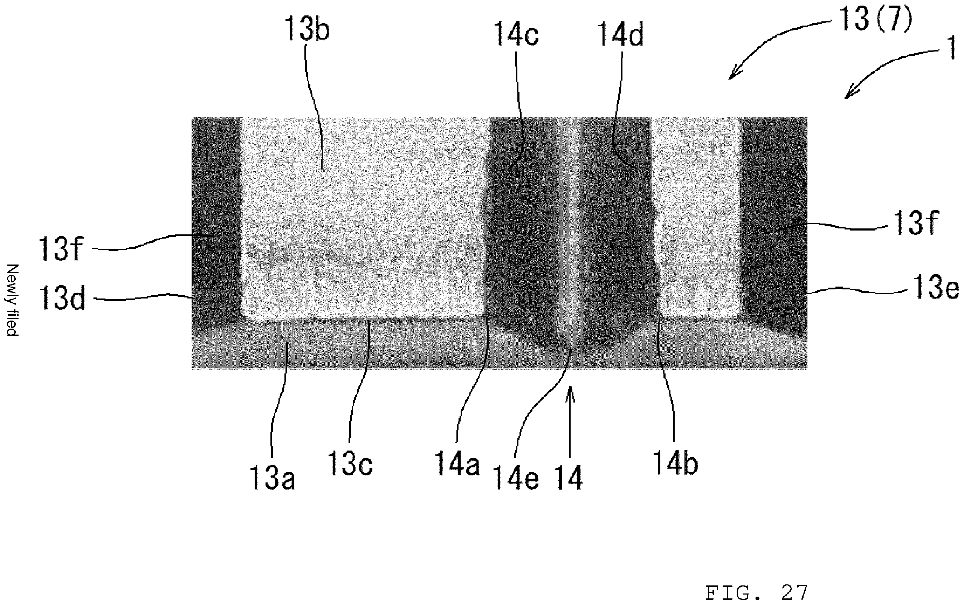

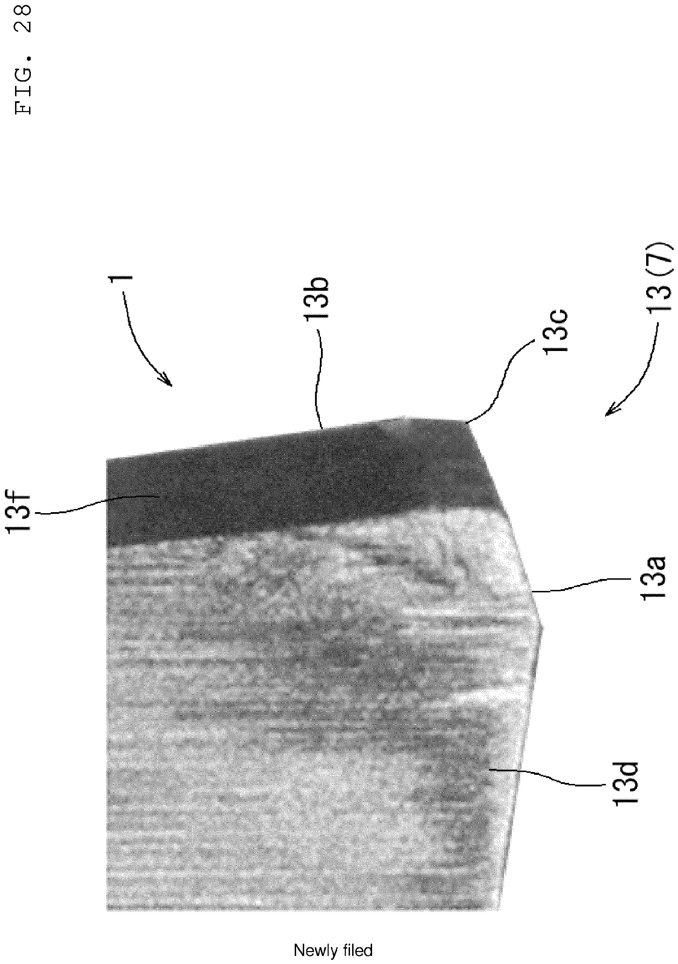

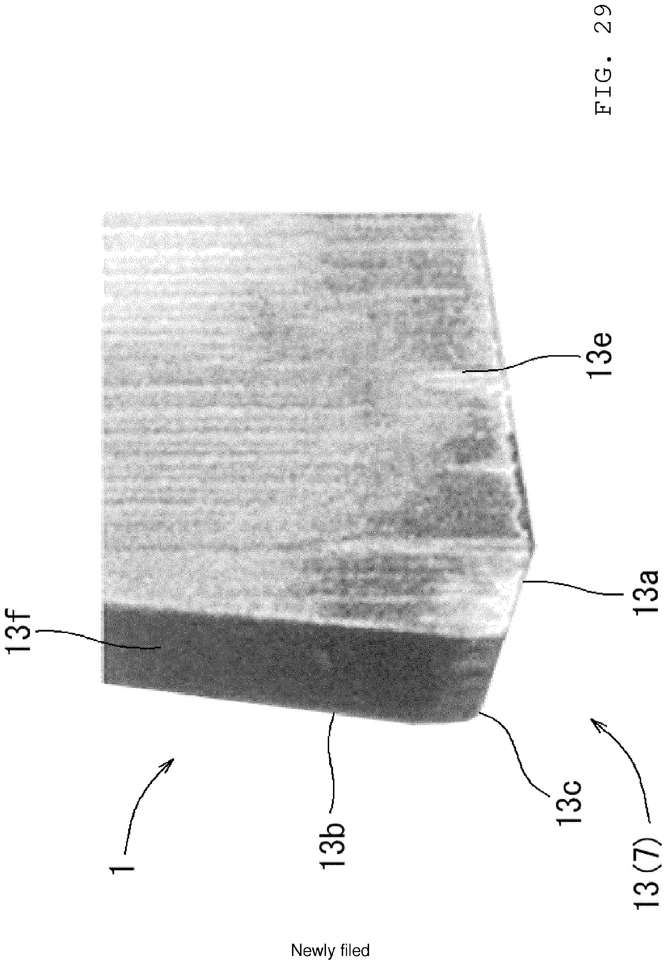

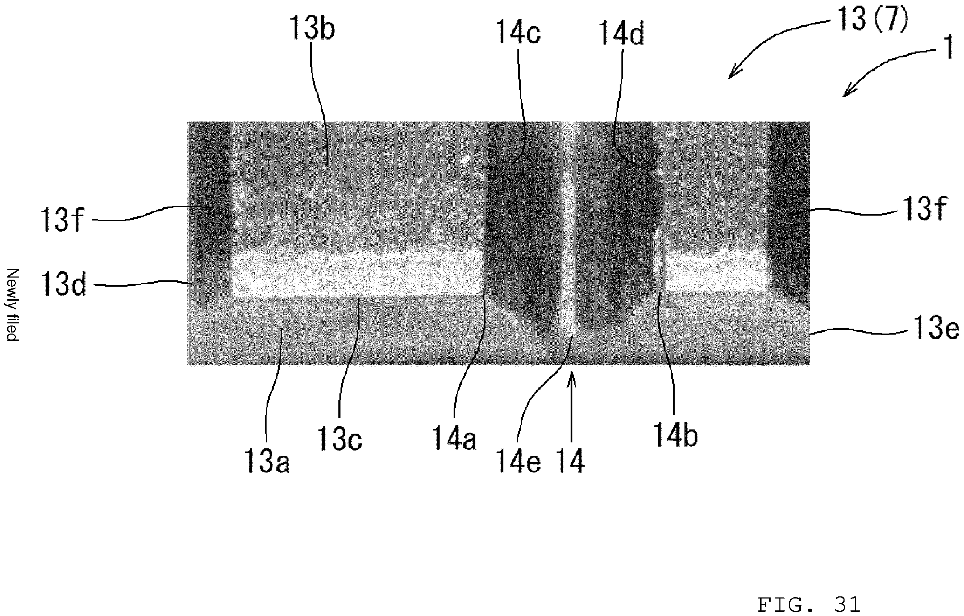

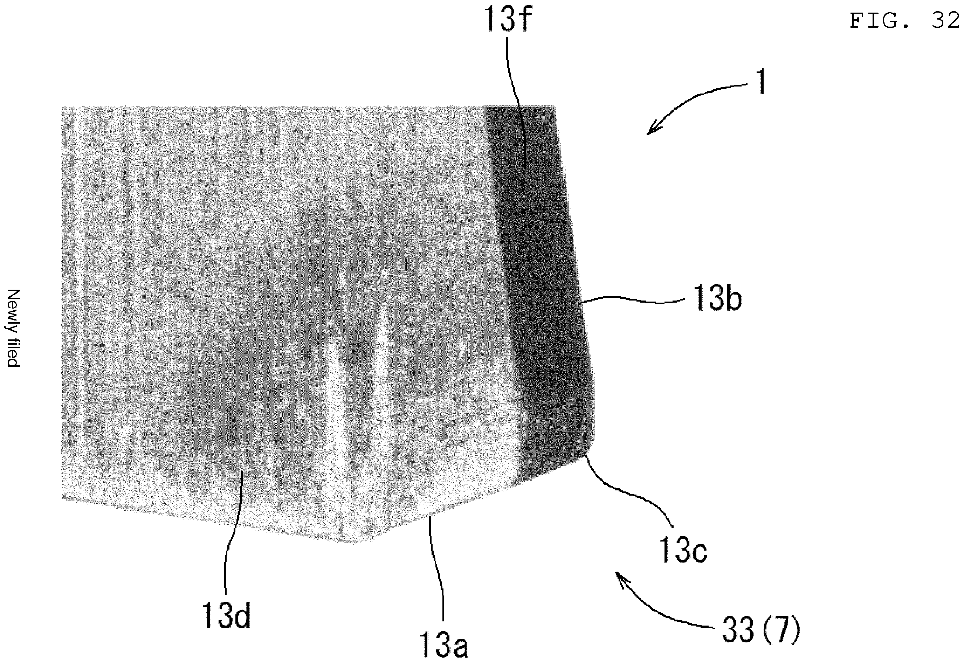

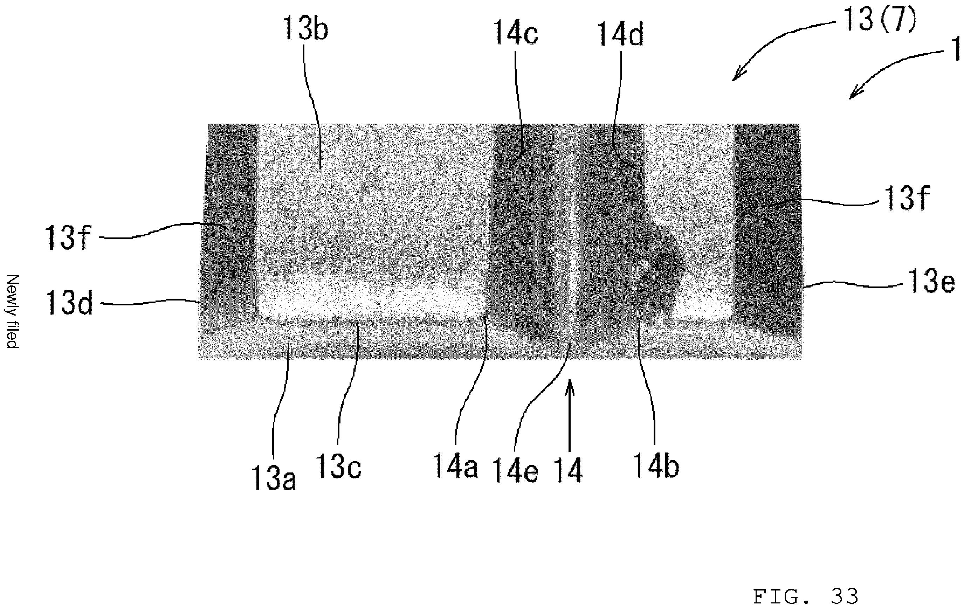

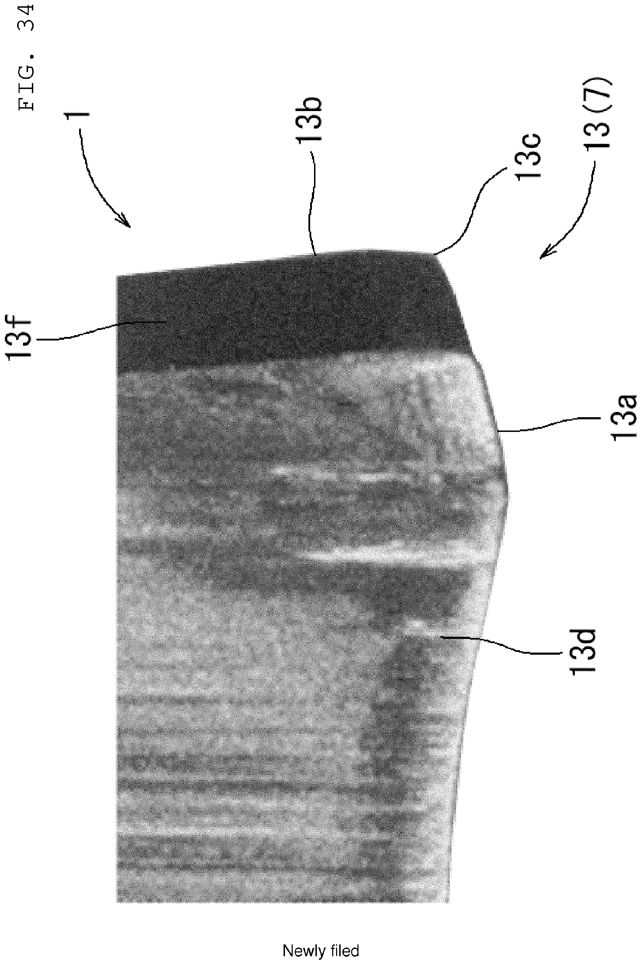

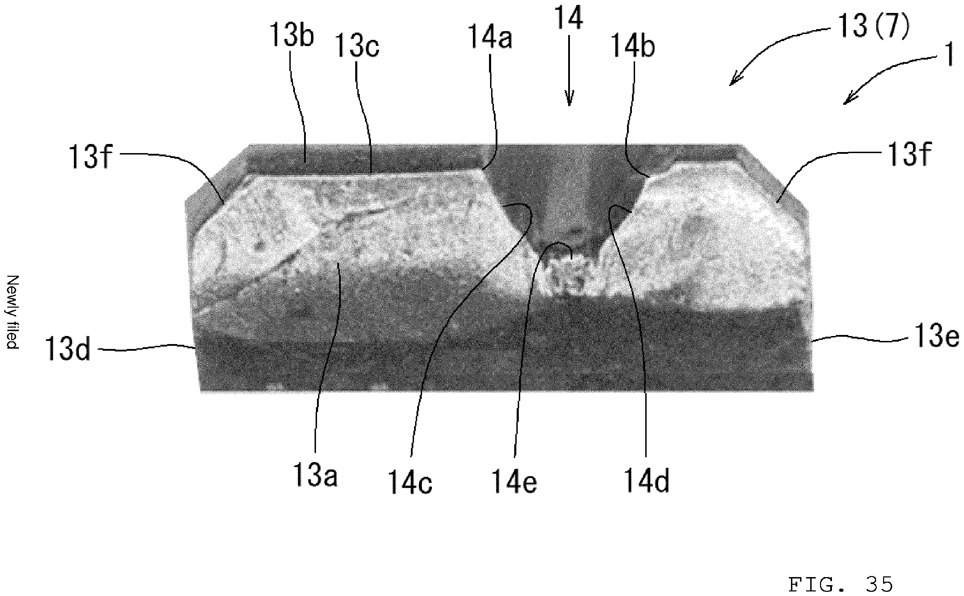

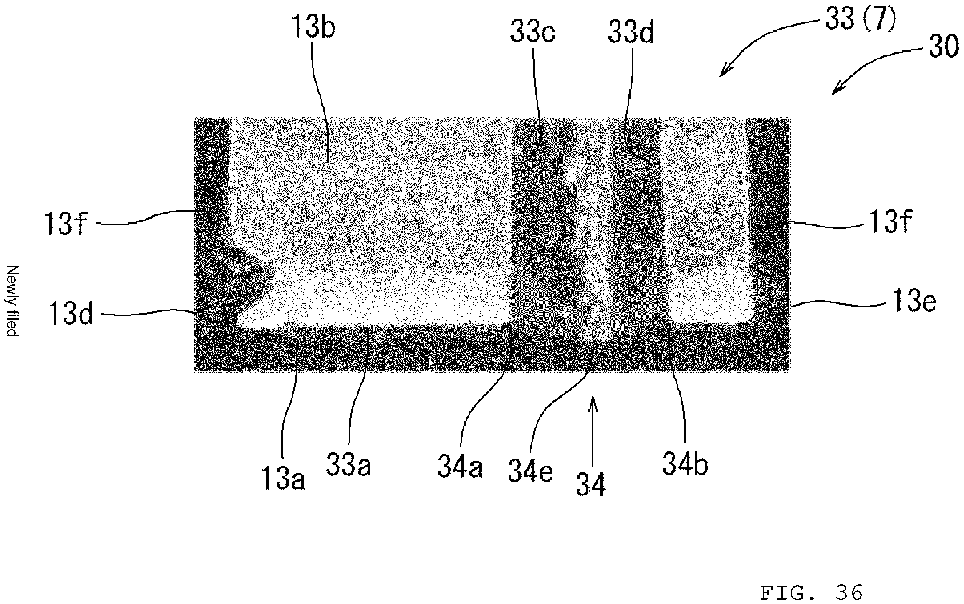

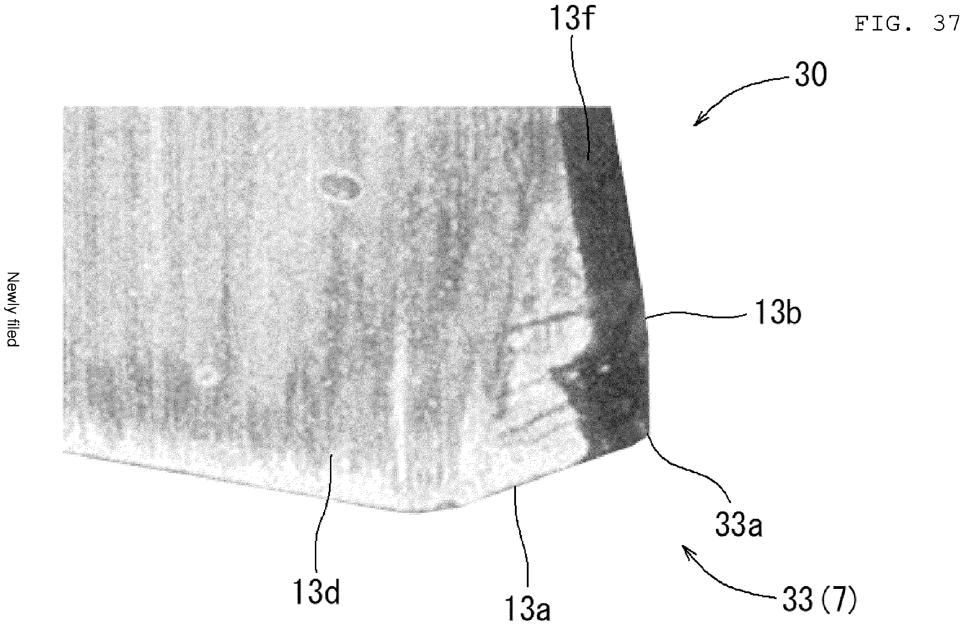

As shown in FIGS. 26 to 37, the chipping conditions of the tips 7 occurred during cutting was compared for the above-described circular saw blades 1, 30. Test pieces and cutting conditions are set similar to those in the tests shown in FIGS. 17 and 18. The first circular saw bade 1 shown in FIGS. 27 to 30 and the circular saw blade 30 shown in FIGS. 36 and 37 were performed cuttings until the number of cuttings reached about 20,000 cuts. The second circular saw blade 1 shown in FIGS. 31 and 32 was performed cuttings with the number of edges set to four and until the number of cuttings reached about 20,000 cuts. The third circular saw blade 1 shown in FIGS. 33 to 35 with the number of edges set to four was performed cuttings until the number of cuttings reached about 25,000 cuts.

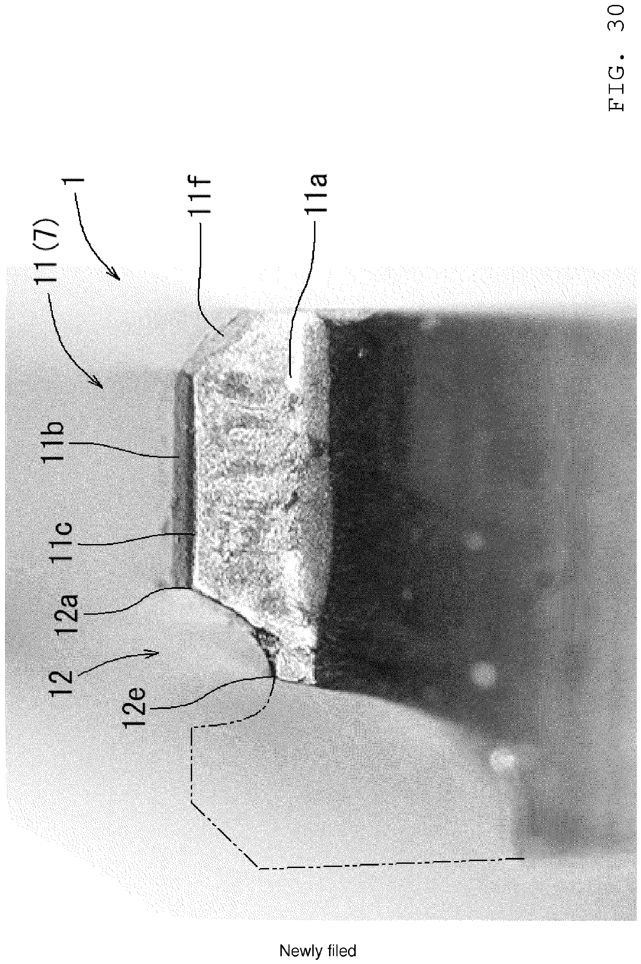

As shown in FIGS. 26 and 30, a large chipping occurred on one tip 7 at the first circular saw blade 1 on the left side near the first groove bottom. This chipping originates from the areas that were not the area of boundary wear that comes into friction with the workpiece as described above. Therefore, this chipping is considered not to be chipping caused by the heat cracks. This chipping caused streaks on the cutting surface of the workpiece. As shown in FIGS. 26 to 29, no heat cracks occurred on the right side face 13e that is connected to the cutting edge 13c on the narrower side. A small degree of heat cracks accompanied by one to two streaks occurred on the left side face 13d that is connected to the cutting edge 13c on the side with a wider width.

As shown in FIGS. 26, 31 and 32, no heat cracks occurred on the tip 7 at the second circular saw blade 1 on the right side face 13e that is connected to the cutting edge 13c on the side with a narrow width. A small degree of heat cracks accompanied by one to two streaks occurred on the left side face 13d that is connected to the cutting edge 13c on the side with a wide width. The cut surface of the workpiece was good.

As shown in FIGS. 26 and 33 to 35, no heat cracks occurred on the tip 7 at the third circular saw blade 1 on the right side face 13e that is connected to the cutting edge 13c on the side with a narrow width. A small degree of heat cracks accompanied by one to two streaks occurred on the left side face 13d that is connected to the cutting edge 13c on the side with a wide width. A crack occurred from the left side face 13d where the heat crack occurred to the right. The cut surface of the workpiece was good. As described above, in the tip 7 of the circular saw blade 1, a crack was formed near the second groove 14 before a crack was formed in the left side face 13d and the right side face 13e.

As shown in FIGS. 36 and 37, a large degree of heat crack and chipping caused by heat crack accompanied by three or more streaks occurred on the tip 7 at the circular saw blade 30 on the left side face 13d that is connected to the cutting edge 33 on the side with a wide width. The occurrence of the heat crack was prevented on the right side face 13e that is connected to the cutting edge 13c on the side with a narrow width.

Based on each of the above-described test results, one preferable configuration of the present disclosure is determined to be a configuration having first tips and second tips in which the sum of the first distance from the first groove bottom to the thickness center of the cutting edge and the second distance from the second groove bottom to the thickness center of the cutting edge is 0.35 mm or less, particularly 0.28 mm or less. With such a configuration, the heat crack that may occur on the side face of the tip may be prevented. Particularly, the occurrence of heat cracks on the side that is connected to the cutting edge on the side with a wide width can be effectively prevented. It is also possible to prevent heat cracks on the side that is connected to the cutting edge on a side with a narrow width so as not to affect the cut surface of the workpiece.

arious modifications may be additionally made to the circular saw blade according to each of the embodiments as described above. A configuration was illustrated in which the first tips 11 and second tips 13 are attached on the base metal 2 with the thickness center 7c of the first tips 11 and the second tips 13 aligned with the thickness center 2b of the base metal 2. Alternatively, for example, it may be configured to arrange the thickness center 7c of the first tip 11 to the right of the thickness center 2b of the base metal 2 and arrange the thickness center 7c of the second tip 13 to the left of the thickness center 2b of the base metal 2. The configuration was illustrated in which the first groove 12 and the second groove 14 do not overlap with each other as viewed from the front in the rotational direction of the circular saw blade 1. Alternatively, it is also possible that the first groove 12 and the second groove 14 overlap with each other as viewed from the front in the rotational direction of the circular saw blade 1. Alternatively, it is also possible to configure the first groove 12 or the second groove 14 in a way that a part of either groove extends over the thickness center 2b of the base metal 2.

It was illustrated that the first groove 12 and the second groove 14 are provided in a symmetrical shape and a symmetrical position with respect to the thickness center 7c of the tip 7. Alternatively, it is also possible to provide the first groove 12 and the second groove 14 to have asymmetrical shape with respect to the thickness center 7c of the tip 7. Alternatively, it is also possible to arrange the first groove 12 and the second groove 14 in asymmetrical positions with respect to the thickness center 7c.

The thickness 7d of the tip 7 shall not be limited to 0.8 mm to 1.1 mm as illustrated, and may be, for example, 1.1 to 2.0 mm. The groove end angle shall not be limited to the illustrated angle, but may be, for example, set to 70°, 80° or 85°. Both the groove end angles of a pair of groove ends may be within the range of 60° to 85°, or one of the groove angles may be within the range of 60° to 85°. The groove end distance 16 may be less than or greater than the illustrated 0.04 mm.

For example, the first groove 52 may be provided such that the inner groove end angle 52j and the outer groove end angle 52k have different sizes. For example, an R-chamfer may be provided at the inner U-shaped end 52d and the outer U-shaped end 52g. For example, the first groove 62 may be provided to have the groove end angle of 60° to 85° at the inner groove end 62a and the outer groove end 62b. For example, the groove bottom angles 92h and 102h may be set to be smaller than or greater than the illustrated 50°. Although the groove extends in a circumferential direction, it may slightly incline at an angle equal to or smaller than the clearance angle. Further, the groove width of the groove may be widened rearward in the rotational direction.

## Claims

1. A tipped circular saw blade comprising:
a disc-shaped base metal having an outer diameter of 200 mm to 500 mm; and
first tips and second tips arranged alternately along an outer circumference of the base metal projecting radially from the outer circumference of the base metal, wherein:
the circular saw blade has a blade thickness of 0.8 mm to 2.0 mm,
each of the first tips and each of the second tips includes
a rake face oriented frontward in a rotational direction of the circular saw blade,
a flank oriented radially outward of the base metal,
a cutting edge formed between the rake face and the flank,
a pair of chamfers formed at both ends of the cutting edge, and
a groove formed in the flank extending from the cutting edge in the circumferential direction,
the groove of the each of the first tips has a first groove bottom that is deepest in a radial direction at a location of a first distance from a thickness center of the cutting edge of the each of the first tips in a first thickness direction,
the groove of the each of the second tips has a second groove bottom that is deepest in the radial direction at a location of a second distance from a thickness center of the cutting edge of the each of the second tips in a second thickness direction opposite to the first thickness direction, and
a sum of the first distance and the second distance is 0.35 mm or less.

2. The tipped circular saw blade according to claim 1, wherein the groove further comprises:
a pair of groove ends intersecting with the cutting edge,
a pair of inclined surfaces provided between one of the pair of groove ends and a groove bottom, wherein the pair of inclined surfaces is configured to be inclined with respect to the cutting edge, and
each of groove end angle between the cutting edge and each of the inclined surfaces at the groove end is 60° to 85°.

3. The tipped circular saw blade according to claim 1 or 2, wherein the groove further comprises:
a pair of groove ends intersecting with the cutting edge, and
a pair of inclined surfaces provided between one of the pair of groove ends and a groove bottom, wherein the pair of inclined surfaces is configured to be inclined with respect to the cutting edge, and
wherein each of groove end angle between the cutting edge and each of the inclined surfaces at the groove end is configured to be larger than each angle of the pair of chamfers with respect to the cutting edge.

4. The tipped circular saw blade according to any one of claims 1 to 3, wherein a sum of a first inner distance being a distance between an inner edge of a first groove that is the groove of the each of the first tips and the thickness center of the cutting edge of the each of the first tips, and a second inner distance being a distance between an inner edge of a second groove that is the groove of the each of the second tips and the thickness center of the cutting edge of the each of the second tips, is smaller than an opening width of the first groove in the cutting edge and smaller than an opening width of the second groove in the cutting edge.

5. The tipped circular saw blade according to claim 4, wherein the sum of the first inner distance and the second inner distance is smaller than half of the opening width of the first groove in the cutting edge and smaller than half of the opening width of the second groove in the cutting edge.

6. The tipped circular saw blade according to any one of claims 1 to 5, wherein a first depth in a radial direction of the groove of the each of the first tips from the cutting edge and a second depth in the radial direction of the groove of the each of the second tips from the cutting edge are both two times or more and five times or less than a depth in the radial direction of the each of the pair of chamfers from the cutting edge.
